# EUROPEAN PATENT APPLICATION

(11) **EP 4 786 923 A1**
(43) Date of publication of application: **05.08.2026**
(21) Application number: 26154683.2
(22) Date of filing: 28.01.2026
(51) Int. Cl.: G01C 21/20

(54) **ROUTE DISPLAY METHOD, ROUTE DISPLAY PROGRAM, AND ROUTE DISPLAY SYSTEM**

(30) Priority: 04.02.2025 JP 2025016603; 05.11.2025 JP 2025186086
(71) Applicant: Yanmar Holdings Co., Ltd., Osaka (JP)
(72) Inventor: TAKAHASHI, Mamoru, Okayama-shi (JP); MURAYAMA, Masaaki, Okayama-shi (JP); NISHII, Yasuto, Okayama-shi (JP); NISHINO, Mitsuya, Okayama-shi (JP)
(74) Representative: Sekiguchi, Kazuya

(57) **Abstract**

[Problem] To provide a route display method, a route display program, and a route display system capable of improving work efficiency of an operator by displaying a travel route for automatically traveling a work vehicle in an easily viewable manner for the operator.

[Solution] In an automatic traveling system 1, a display processing unit 213 displays, on an operation terminal 20, a travel route for automatically traveling a work vehicle 10. The display processing unit 213 sets a first display mode in which all of a plurality of the travel routes generated on a basis of a plurality of sides forming an outer shape of a travel area are displayed, or a second display mode in which specific travel routes generated on a basis of a specific side among the plurality of sides are displayed, and displays, on the operation terminal 20, the travel routes on a basis of the set first display mode or the set second display mode.

## Description

### TECHNICAL FIELD

The present invention relates to a route display method, a route display program, and a route display system for displaying a travel route for automatically traveling a work vehicle.

### BACKGROUND ART

Conventionally, a work vehicle that automatically travels along a preset travel route (target route) in a field is known. For example, a system that displays travel routes for automatically traveling a work vehicle in a work area on an inner side of a field, and a headland area around the work area is known (see, for example, Patent Document 1).

### PRIOR ART DOCUMENT

### PATENT DOCUMENT

Patent Document 1: JP-A-2020-092621

### SUMMARY OF INVENTION

### TECHNICAL PROBLEM

However, in the conventional technique, since a travel route generated on the basis of each of a plurality of sides of a field is displayed in the entire field, a display screen becomes difficult to see, and there arises a problem that work efficiency of an operator who performs work while looking at the display screen is reduced.

An object of the present invention is to provide a route display method, a route display program, and a route display system capable of improving work efficiency of an operator by displaying a travel route for automatically traveling a work vehicle in an easily viewable manner for the operator.

### SOLUTION TO PROBLEM

A route display method according to the present invention is a method for displaying, on an operation terminal, a travel route for automatically traveling a work vehicle. The route display method includes: setting a first display mode in which all of a plurality of the travel routes generated on the basis of a plurality of sides forming an outer shape of a travel area are displayed, or a second display mode in which specific travel routes generated on the basis of a specific side among the plurality of sides are displayed; and displaying, on the operation terminal, the travel routes on the basis of the set first display mode or the set second display mode.

A route display program according to the present invention is a program for displaying, on an operation terminal, a travel route for automatically traveling a work vehicle. The route display program is a program causing one or a plurality of processors to execute: setting a first display mode in which all of a plurality of the travel routes generated on the basis of a plurality of sides forming an outer shape of a travel area are displayed, or a second display mode in which specific travel routes generated on the basis of a specific side among the plurality of sides are displayed; and displaying, on the operation terminal, the travel routes on the basis of the set first display mode or the set second display mode.

A route display system according to the present invention is a system for displaying, on an operation terminal, a travel route for automatically traveling a work vehicle. In the route display system, a first display mode in which all of a plurality of the travel routes generated on the basis of a plurality of sides forming an outer shape of a travel area are displayed, or a second display mode in which specific travel routes generated on the basis of a specific side among the plurality of sides are displayed, is set, and the travel routes are displayed on the operation terminal, on the basis of the set first display mode or the set second display mode.

### ADVANTAGEOUS EFFECTS OF INVENTION

According to the present invention, it is possible to provide a route display method, a route display program, and a route display system capable of improving work efficiency of an operator by displaying a travel route for automatically traveling a work vehicle in an easily viewable manner for the operator.

### BRIEF DESCRIPTION OF DRAWINGS

Fig. 1 is a block diagram showing a configuration of an automatic traveling system according to an embodiment of the present invention;
Fig. 2A is an external side view showing a configuration of a work vehicle according to the embodiment of the present invention;
Fig. 2B is a plan view schematically showing the configuration of the work vehicle according to the embodiment of the present invention;
Fig. 2C is a plan view schematically showing a configuration of a work vehicle according to another embodiment of the present invention;
Fig. 3 is a diagram showing an example of travel routes (target routes) set in a field according to the embodiment of the present invention;
Fig. 4 is a diagram showing an example of a menu screen displayed on an operation terminal according to the embodiment of the present invention;
Fig. 5 is a diagram showing an example of an operation screen displayed on the operation terminal according to the embodiment of the present invention;
Fig. 6A is a diagram showing an example of an operation screen in a first display mode displayed on the operation terminal according to the embodiment of the present invention;
Fig. 6B is a diagram showing an example of an operation screen in a second display mode displayed on the operation terminal according to the embodiment of the present invention;
Fig. 7 is a diagram showing an example of a setting screen displayed on the operation terminal according to the embodiment of the present invention;
Fig. 8 is a diagram for describing a method for setting a reference side according to the embodiment of the present invention;
Fig. 9A is a diagram showing a specific example of a travel route display method in the first display mode according to the embodiment of the present invention;
Fig. 9B is a diagram showing a specific example of the travel route display method in the first display mode according to the embodiment of the present invention;
Fig. 9C is a diagram showing a specific example of the travel route display method in the first display mode according to the embodiment of the present invention;
Fig. 10A is a diagram showing a specific example of a travel route display method in the second display mode according to the embodiment of the present invention;
Fig. 10B is a diagram showing a specific example of the travel route display method in the second display mode according to the embodiment of the present invention;
Fig. 10C is a diagram showing a specific example of the travel route display method in the second display mode according to the embodiment of the present invention;
Fig. 11A is a diagram showing a specific example of the travel route display method in the second display mode according to another embodiment of the present invention;
Fig. 11B is a diagram showing a specific example of the travel route display method in the second display mode according to another embodiment of the present invention;
Fig. 11C is a diagram showing a specific example of the travel route display method in the second display mode according to another embodiment of the present invention;
Fig. 12 is a flowchart showing an example of procedures of automatic traveling processing executed by the automatic traveling system according to the embodiment of the present invention;
Fig. 13A is a diagram showing a specific example of the travel route display method in the second display mode according to another embodiment of the present invention;
Fig. 13B is a diagram showing a specific example of the travel route display method in the second display mode according to another embodiment of the present invention;
Fig. 14A is a diagram showing a specific example of the travel route display method in the second display mode according to another embodiment of the present invention;
Fig. 14B is a diagram showing a specific example of the travel route display method in the second display mode according to another embodiment of the present invention;
Fig. 15A is a diagram showing an example of an operation screen displayed on the operation terminal according to another embodiment of the present invention;
Fig. 15B is a diagram showing a specific example of the travel route display method in the second display mode according to another embodiment of the present invention;
Fig. 15C is a diagram showing a specific example of the travel route display method in the second display mode according to another embodiment of the present invention;
Fig. 16A is a diagram showing a specific example of the travel route display method in the first display mode according to another embodiment of the present invention;
Fig. 16B is a diagram showing a specific example of the travel route display method in the first display mode according to another embodiment of the present invention;
Fig. 17A is a diagram showing a specific example of the travel route display method in the second display mode according to another embodiment of the present invention;
Fig. 17B is a diagram showing a specific example of the travel route display method in the second display mode according to another embodiment of the present invention;
Fig. 18A is a diagram showing a specific example of the travel route display method in the second display mode according to another embodiment of the present invention;
Fig. 18B is a diagram showing a specific example of the travel route display method in the second display mode according to another embodiment of the present invention;
Fig. 19A is a diagram showing a specific example of the travel route display method in the first display mode according to another embodiment of the present invention;
Fig. 19B is a diagram showing a specific example of the travel route display method in the first display mode according to another embodiment of the present invention;
Fig. 20A is a diagram showing a specific example of the travel route display method in the first display mode according to another embodiment of the present invention;
Fig. 20B is a diagram showing a specific example of the travel route display method in the first display mode according to another embodiment of the present invention; and
Fig. 21 is a diagram showing a specific example of the travel route display method in the second display mode according to another embodiment of the present invention.

### DESCRIPTION OF EMBODIMENTS

The following embodiments are embodied examples of the present invention and do not limit the technical scope of the present invention.

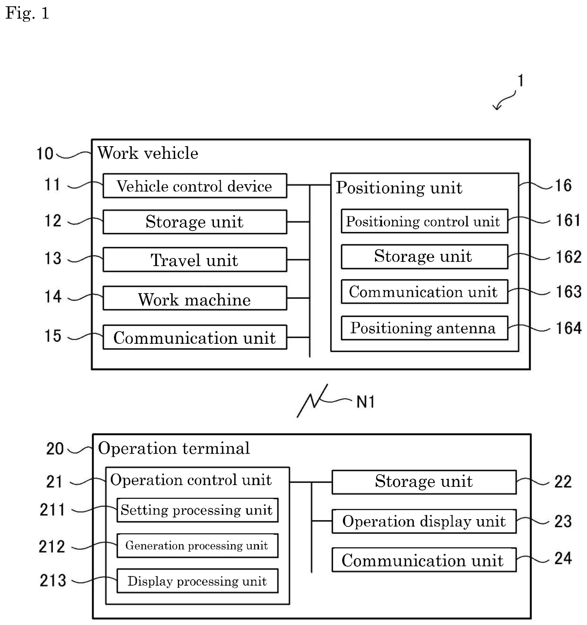

As shown in Fig. 1, an automatic traveling system 1 according to an embodiment of the present invention includes a work vehicle 10 and an operation terminal 20. The work vehicle 10 and the operation terminal 20 can communicate via a communication network N1. For example, the work vehicle 10 and the operation terminal 20 can communicate via a mobile telephone network, a packet network, or a wireless LAN.

In the present embodiment, a case where the work vehicle 10 is a tractor will be described as an example. Note that, as another embodiment, the work vehicle 10 may be a rice transplanter, a combine, a construction machine, a snowplow, or the like. The work vehicle 10 is configured to automatically travel (autonomously travel) in a previously registered field. For example, an operator registers a field (travel area) where work is to be performed, and sets a travel route (target route) for automatically traveling the work vehicle 10 with respect to the field. The work vehicle 10 automatically travels along the travel route on the basis of position information on a current position of the work vehicle 10 calculated by a positioning unit 16. In addition, the work vehicle 10 performs predetermined work while automatically traveling within the field.

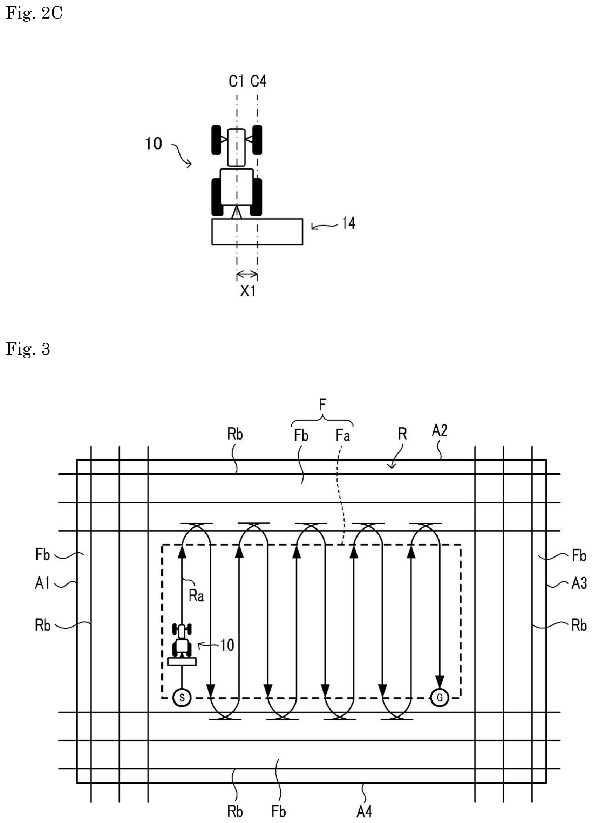

For example, the work vehicle 10 automatically travels along a travel route R in a field F shown in Fig. 3. Specifically, the work vehicle 10 performs work while automatically traveling along a travel route Ra from a work start position S to a work end position G in a work area Fa that is an inner area of the field F. The travel route Ra includes a work route (straight route) and a non-work route (moving route, turning route, and the like). The travel route Ra is not limited to the route shown in Fig. 3, and is appropriately set according to work content. The work start position S and the work end position G can be set at arbitrary positions within the field F. The work vehicle 10 performs work while automatically traveling along a plurality of travel routes Rb, which are straight routes, in a headland area Fb, which is an outer area of surroundings of the work area Fa. The travel route Rb includes a work route (straight route) and does not include a turning route. The travel route Rb is generated in parallel for each side (outer shape side) forming an outer shape of the field F, for example. In an example shown in Fig. 3, the field F is configured in a rectangular shape by a left side A1, an upper side A2, a right side A3, and a lower side A4, and in the headland area Fb, the plurality of travel routes Rb parallel to the left side A1, the plurality of travel routes Rb parallel to the upper side A2, the plurality of travel routes Rb parallel to the right side A3, and the plurality of travel routes Rb parallel to the lower side A4 are generated. The work vehicle 10 automatically travels on each travel route Rb according to automatic steering, and manually travels between the travel routes Rb according to manual steering by the operator. As described above, the travel route R includes the travel routes Ra and Rb, the travel route Ra is a work route generated in the work area Fa, and the travel route Rb is a headland area straight route generated in the headland area Fb.

The operation terminal 20 is an operation device that registers the field F, sets the travel route R, receives a start instruction and a stop instruction of automatic traveling from the operator, and displays a work situation during the automatic traveling. The operator can bring the operation terminal 20 into an inside of the work vehicle 10 and operate the operation terminal, or can operate the operation terminal 20 outside the work vehicle 10.

Here, when all the travel routes R are displayed on the operation terminal 20, a display screen becomes difficult to see, and there arises a problem that work efficiency of the operator who performs work while looking at the display screen is lowered. In particular, when the work vehicle 10 travels in the headland area Fb, if all the travel routes Rb corresponding to the respective sides A1 to A4 (see Fig. 3) are displayed on the operation terminal 20, the display of the travel routes Rb becomes complicated, and work efficiency of the operator who performs manual steering in the headland area Fb is significantly reduced. On the other hand, as described below, the automatic traveling system 1 according to the present embodiment has a configuration capable of improving work efficiency of the operator by displaying the travel route R for automatically traveling the work vehicle 10 in an easily viewable manner for the operator.

### [Work vehicle 10]

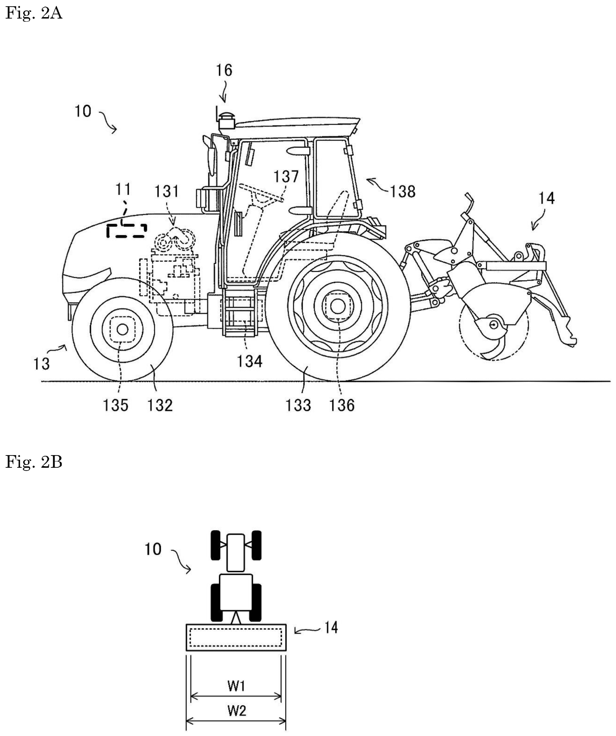

As shown in Figs. 1 and 2A, the work vehicle 10 includes a vehicle control device 11, a storage unit 12, a travel device 13, a work machine 14, a communication unit 15, the positioning unit 16, and the like. The vehicle control device 11 is electrically connected to the storage unit 12, the travel device 13, the work machine 14, the positioning unit 16, and the like. Note that the vehicle control device 11 and the positioning unit 16 may be able to perform wireless communication.

The communication unit 15 is a communication interface for connecting the work vehicle 10 to the communication network N1 in a wired or wireless manner and executing data communication in accordance with a predetermined communication protocol with an external device such as the operation terminal 20 via the communication network N1. The work vehicle 10 can perform wireless communication with the operation terminal 20 via the communication unit 15.

The travel device 13 is a driving unit that causes the work vehicle 10 to travel. As shown in Fig. 2A, the travel device 13 includes an engine 131, front wheels 132, rear wheels 133, a transmission 134, a front axle 135, a rear axle 136, a steering wheel 137, and the like. Note that the front wheels 132 and the rear wheels 133 are provided on the left and right of the work vehicle 10. In addition, the travel device 13 is not limited to a wheel type including the front wheels 132 and the rear wheels 133, and may be a crawler type including crawlers provided on the left and right of the work vehicle 10.

The engine 131 is a drive source such as a diesel engine or a gasoline engine driven using fuel supplied to a fuel tank (not shown). The travel device 13 may include an electric motor as a drive source together with the engine 131 or instead of the engine 131. A generator (not shown) is connected to the engine 131, and electric power is supplied from the generator to an electric component such as the vehicle control device 11, a battery, and the like, provided in the work vehicle 10. Note that the battery is charged with electric power supplied from the generator. Moreover, electric components such as the vehicle control device 11 and the positioning unit 16 provided in the work vehicle 10 can be driven with electric power supplied from the battery even after the engine 131 is stopped.

A driving force of the engine 131 is transmitted to the front wheels 132 via the transmission 134 and the front axle 135, and is transmitted to the rear wheels 133 via the transmission 134 and the rear axle 136. Further, the driving force of the engine 131 is also transmitted to the work machine 14 via a PTO shaft (not shown). When the work vehicle 10 automatically travels, the travel device 13 performs a travel operation in accordance with a command from the vehicle control device 11.

The work machine 14 is, for example, a tiller, a mower, a plow, a fertilizing machine, a seeder, a spreader, or the like, and is detachable from the work vehicle 10. Thus, the work vehicle 10 can perform various types of work using any of the work machines 14. Fig. 2A shows a case where the work machine 14 is a tiller.

The work machine 14 may be supported in the work vehicle 10 so as to be able to be lifted and lowered by a lifting and lowering mechanism (not shown). The vehicle control device 11 can lift and lower the work machine 14 by controlling the lifting and lowering mechanism. For example, the vehicle control device 11 lowers the work machine 14 when the work vehicle 10 travels straight in a forward direction on the work route, and lifts the work machine 14 when the work vehicle 10 turns and travels. When acquiring a work stop instruction, the vehicle control device 11 outputs a work stop command to the work machine 14. For example, the vehicle control device 11 acquires a stop instruction from the operation terminal 20 when the operator performs a stop instruction operation on the operation terminal 20. When acquiring the work stop instruction, the vehicle control device 11 stops driving of the PTO shaft and stops work of the work machine 14.

The steering wheel 137 is an operation unit operated by the operator or the vehicle control device 11. For example, in the travel device 13, according to an operation of the steering wheel 137 by the vehicle control device 11, an angle of the front wheel 132 is changed by a hydraulic power steering mechanism (not shown) or the like and a travel direction of the work vehicle 10 is changed. When the operator performs a teaching operation when registering the field F, the operator operates the steering wheel 137 to manually travel the work vehicle 10. When moving the work vehicle 10 to the work start position S, the operator operates the steering wheel 137 to manually travel the work vehicle 10.

In addition to the steering wheel 137, the travel device 13 includes a shift lever, an accelerator, a brake, and the like (not shown) operated by the vehicle control device 11. Then, in the travel device 13, a gear of the transmission 134 is switched to a forward gear, a back gear, or the like according to an operation of the shift lever by the vehicle control device 11, and a traveling mode of the work vehicle 10 is switched to forward or backward. Further, the vehicle control device 11 operates the accelerator to control a rotation speed of the engine 131. Further, the vehicle control device 11 operates the brake to brake rotation of the front wheels 132 and the rear wheels 133 by using an electromagnetic brake.

The positioning unit 16 is a communication device including a positioning control unit 161, a storage unit 162, a communication unit 163, a positioning antenna 164 (see Fig. 1), and the like. For example, as shown in Fig. 2A, the positioning unit 16 is provided in an upper portion of the cabin 138 that the operator boards. Further, the positioning unit 16 is not necessarily installed in the cabin 138. Further, the positioning control unit 161, the storage unit 162, the communication unit 163, and the positioning antenna 164 of the positioning unit 16 may be dispersedly arranged at different positions in the work vehicle 10. As described above, a battery is connected to the positioning unit 16, and the positioning unit 16 can operate even while the engine 131 is stopped. Further, the positioning unit 16 may be substituted by, for example, a mobile phone, smartphone, or a tablet terminal, a quantum compass, or the like.

The positioning control unit 161 is a computer system including one or a plurality of processors and a storage memory such as a non-volatile memory and a RAM. The storage unit 162 is a non-volatile memory or the like that stores a program for causing the positioning control unit 161 to execute positioning processing, and data such as positioning information and movement information. For example, the program is non-temporarily recorded in a computer-readable recording medium such as a CD or a DVD, and is read by a predetermined reading device (not shown) and stored in the storage unit 162. Note that the program may be downloaded from a server (not shown) to the positioning unit 16 via the communication network N1 and stored in the storage unit 162.

The communication unit 163 is a communication interface for connecting the positioning unit 16 to the communication network in a wired or wireless manner and executing data communication in accordance with a predetermined communication protocol with an external device such as a base station server via the communication network.

The positioning antenna 164 is an antenna that receives a radio wave (GNSS signal) transmitted from a satellite.

The positioning control unit 161 calculates the current position of the work vehicle 10 on the basis of the GNSS signal received by the positioning antenna 164 from the satellite. For example, in a case where the work vehicle 10 automatically travels within the field F, when the positioning antenna 164 receives a radio wave (transmission time, orbital information, and the like) transmitted from each of a plurality of satellites, the positioning control unit 161 calculates a distance between the positioning antenna 164 and each satellite, and calculates the current position (latitude and longitude) of the work vehicle 10 on the basis of the calculated distance. In addition, the positioning control unit 161 may perform positioning using a real-time kinematic method (RTK-GNSS positioning method (RTK method)) in which the current position of the work vehicle 10 is calculated using correction information corresponding to a base station (reference station) near the work vehicle 10. In such a manner, the work vehicle 10 automatically travels using positioning information obtained by the RTK method. Note that the current position of the work vehicle 10 may be the same position as a positioning position (for example, a position of the positioning antenna 164), or may be a position shifted from the positioning position. Note that the positioning control unit 161 may calculate (perform positioning of) the current position of the work vehicle 10 using a quantum compass.

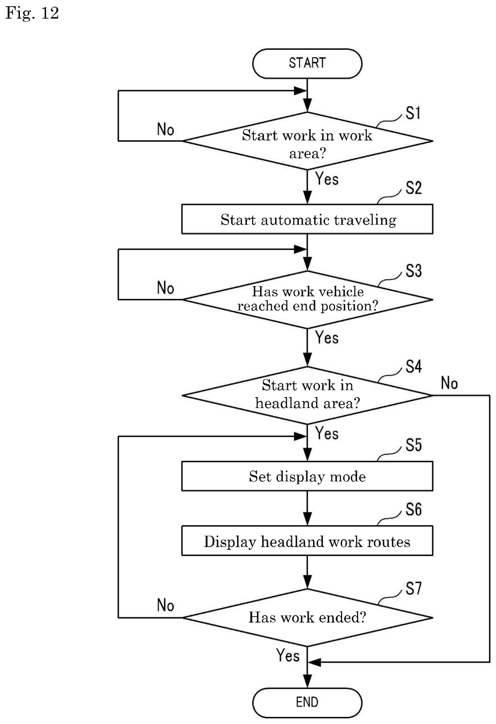

The storage unit 12 is a non-volatile storage unit such as a hard disk drive (HDD), a solid state drive (SSD), or a flash memory that stores various types of information. The storage unit 12 stores a control program such as an automatic traveling program for causing the vehicle control device 11 to execute automatic traveling processing (see Fig. 12). For example, the automatic traveling program is non-temporarily recorded in a computer-readable recording medium such as a flash ROM, an EEPROM, a CD, or a DVD, and is read by a predetermined reading device (not shown) and stored in the storage unit 12. Note that the automatic traveling program may be downloaded from a server (not shown) to the work vehicle 10 via the communication network N1 and stored in the storage unit 12. The storage unit 12 may store route data of the travel route R generated by the operation terminal 20.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work area) for various types of processing executed by the CPU. Then, the vehicle control device 11 controls the work vehicle 10 by executing, with the CPU, various control programs stored in advance in the ROM or the storage unit 12.

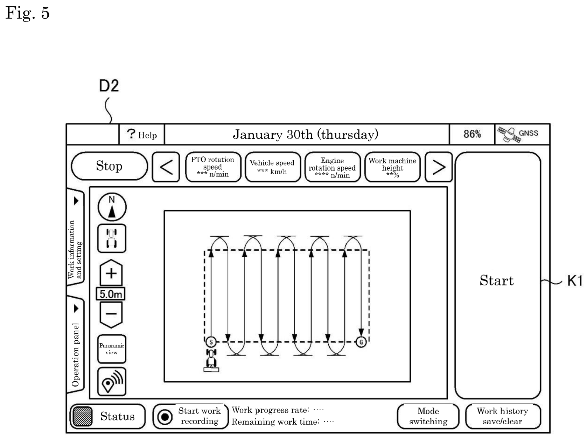

The vehicle control device 11 controls the operation of the work vehicle 10 according to various user operations on the work vehicle 10. In addition, the vehicle control device 11 executes the automatic traveling processing of the work vehicle 10 on the basis of the current position of the work vehicle 10 calculated by the positioning unit 16 and the travel route R set in advance. For example, when an automatic traveling start condition is satisfied and the operator presses a start button K1 (see Fig. 5 and the like) on the operation terminal 20, the operation terminal 20 outputs an automatic traveling start instruction to the work vehicle 10. The automatic traveling start condition includes, for example, that positioning accuracy is a predetermined value or more, that the current position of the work vehicle 10 is within a predetermined range from the travel route R, that a direction (bearing) of the work vehicle 10 is within a predetermined angle with respect to a bearing of the travel route R, and the like. Note that the automatic traveling start condition is not limited to each condition described above.

When acquiring the automatic traveling start instruction from the operation terminal 20, the vehicle control device 11 starts automatic traveling of the work vehicle 10 on the basis of the position information indicating the position of the work vehicle 10 obtained by positioning by the positioning control unit 161. As a result, the work vehicle 10 starts automatically traveling along the travel route Ra (see Fig. 3) in the work area Fa, and starts work by the work machine 14. In addition, the work vehicle 10 starts automatically traveling along the travel route Rb (see Fig. 3) in the headland area Fb, and starts work by the work machine 14. The travel route R on which the work vehicle 10 travels is generated in advance by the operation terminal 20, for example. The work vehicle 10 acquires route data of the travel route R from the operation terminal 20, and automatically travels within the field F along the travel route R.

In addition, when acquiring an automatic traveling stop instruction from the operation terminal 20, the vehicle control device 11 stops automatic traveling of the work vehicle 10. For example, when the operator presses a stop button on the operation terminal 20, the operation terminal 20 outputs the automatic traveling stop instruction to the work vehicle 10. When acquiring the automatic traveling stop instruction from the operation terminal 20, the vehicle control device 11 stops automatic traveling of the work vehicle 10. As a result, the work vehicle 10 stops the automatic traveling and stops work by the work machine 14.

When the operator boards the work vehicle 10 and causes the work vehicle 10 to execute automatic traveling and work, the operation terminal 20 is installed in the cabin 138 of the work vehicle 10, and the operator can operate the operation terminal 20 in the cabin 138.

Although not shown, the work vehicle 10 may further include an obstacle sensor and a camera. The obstacle sensor is a sensor that detects an obstacle in a predetermined detection area using infrared rays, ultrasonic waves, or the like.

The camera is a digital camera that images a subject and outputs the captured image as digital image data. The camera continuously images the subject at a predetermined frame rate, generates a frame image having a predetermined resolution, and transmits the frame image to the vehicle control device 11.

The vehicle control device 11 acquires measurement information from the obstacle sensor and acquires a captured image from the camera. When an obstacle is detected, the vehicle control device 11 causes the work vehicle 10 to perform avoidance travel or stop so as not to come into contact with the obstacle. In addition, the vehicle control device 11 outputs image data of the captured image acquired from the camera to the operation terminal 20. When acquiring the image data, the operation terminal 20 displays the captured image on an operation screen.

### [Operation terminal 20]

As shown in Fig. 1, the operation terminal 20 is an information processing device including an operation control unit 21, a storage unit 22, an operation display unit 23, a communication unit 24, and the like. The operation terminal 20 may include a portable terminal such as a tablet terminal or a smartphone.

The communication unit 24 is a communication interface for connecting the operation terminal 20 to the communication network N1 in a wired or wireless manner and executing data communication in accordance with a predetermined communication protocol with an external device such as one or a plurality of work vehicles 10 via the communication network N1.

The operation display unit 23 is a user interface including a display unit such as a liquid crystal display or an organic EL display that displays various types of information, and an operation unit such as a touch panel, a mouse, or a keyboard that receives an operation. The operator can perform an operation of setting and registering various types of information (work vehicle information, field information, work area information, and the like, to be described later) by operating the operation unit on the operation screen displayed on the display unit. In addition, the operator can operate the operation unit to give the automatic traveling start instruction, the automatic traveling stop instruction, or the like to the work vehicle 10. Further, the operator can check a travel situation, a work situation, and the like of the work vehicle 10 that automatically travels within the field F along the travel route R by the information displayed on the operation terminal 20 at a place away from the work vehicle 10.

The storage unit 22 is a non-volatile storage unit such as an HDD, an SSD, or a flash memory that stores various types of information. The storage unit 22 stores a control program such as an automatic traveling program for causing the operation control unit 21 to execute the automatic traveling processing (see Fig. 12). For example, the automatic traveling program is non-temporarily recorded in a computer-readable recording medium such as a CD or a DVD, and is read by a predetermined reading device (not shown) and stored in the storage unit 22. Note that the automatic traveling program may be downloaded from a server (not shown) to the operation terminal 20 via the communication network N1 and stored in the storage unit 22.

The operation control unit 21 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work area) for various types of processing executed by the CPU. Then, the operation control unit 21 controls the operation terminal 20 by executing, with the CPU, various control programs stored in advance in the ROM or the storage unit 22.

Specifically, as shown in Fig. 1, the operation control unit 21 includes various processing units such as a setting processing unit 211, a generation processing unit 212, and a display processing unit 213. Note that the operation control unit 21 functions as the various processing units by executing, with the CPU, various types of processing in accordance with the control program. In addition, some or all of the processing units may include an electronic circuit. Note that the control program may be a program for causing a plurality of processors to function as the processing unit.

The setting processing unit 211 sets various types of setting information for causing the work vehicle 10 to execute automatic traveling. Specifically, the setting processing unit 211 sets information regarding the work vehicle 10 (hereinafter, referred to as work vehicle information). When the operator performs a registration operation on the operation terminal 20, the setting processing unit 211 sets information such as a type (model) of the work vehicle 10, a position where the positioning antenna 164 is attached in the work vehicle 10, a type of the work machine 14, a size and a shape of the work machine 14, a position of the work machine 14 with respect to the work vehicle 10, a vehicle speed and an engine rotation speed during work of the work vehicle 10, and a vehicle speed and an engine rotation speed during turning of the work vehicle 10.

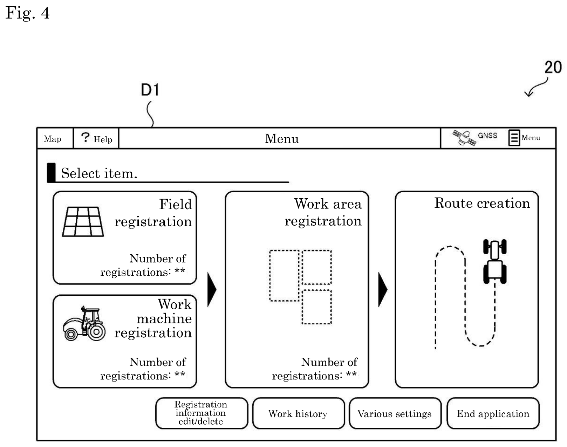

For example, the setting processing unit 211 causes the operation display unit 23 to display a menu screen D1 shown in Fig. 4. For example, the operator selects "work machine registration" on the menu screen D1 and registers work machine information related to the work machine. The operator registers, as the work machine information, a length of the work machine, a work machine width (width W2 in Fig. 2B), a work width (width W1 in Fig. 2B), an overlap width, and the like.

Further, the setting processing unit 211 sets information regarding the field F (hereinafter, referred to as field information). Specifically, the setting processing unit 211 acquires a position and a shape of the field F and registers the field F. The information on the position and the shape of the field F can be automatically acquired, for example, when the operator boards the work vehicle 10 and drives the work vehicle so as to circle around along an outer periphery of the field F, and records a transition of position information on the positioning antenna 164 at that time. In addition, the position and the shape of the field F can also be acquired on the basis of a polygon obtained by the operator operating the operation terminal 20 and designating a plurality of points on a map in a state where the map is displayed on the operation terminal 20. An area specified by the acquired position and shape of the field F is an area where the work vehicle 10 can travel (travel area). For example, the operator selects "field registration" on the menu screen D1 to register the field information.

Furthermore, the setting processing unit 211 sets information regarding the work area (hereinafter, referred to as work area information). Specifically, the setting processing unit 211 sets the work area Fa and the headland area Fb in which the work vehicle 10 is caused to perform work while causing the work vehicle 10 to automatically travel in the registered field F. Specifically, the setting processing unit 211 sets information such as a position and a shape of the field F, the work area Fa and the headland area Fb, the work start position S at which the work starts, the work end position G at which the work ends, and a work direction, according to the operation of the operator on the operation terminal 20. Note that the work direction means a direction in which the work vehicle 10 travels while performing work with the work machine 14 in the work area Fa. The work area Fa and the headland area Fb are set within the travel area. For example, the setting processing unit 211 sets the work area Fa and the headland area Fb by the operator registering distances from the respective sides A1 to A4 of the field F. The operator selects "work area registration" on the menu screen D1 to register the work area information.

The generation processing unit 212 generates the travel route R, which is a route for automatically traveling the work vehicle 10, on the basis of the respective pieces of setting information set by the setting processing unit 211. For example, the operator selects "route creation" on the menu screen D1 and gives an instruction to generate the travel route R. The generation processing unit 212 receives, from the operator, setting operations such as the presence or absence of cooperative work between the unmanned work vehicle 10 and the manned work vehicle 10, the number of skips which is the number of routes to be skipped when the work vehicle 10 turns in the headland area Fb, and a width of the headland area Fb, and generates the travel route R on the basis of these pieces of information and the respective pieces of setting information.

The travel route R includes, for example, the travel route Ra set in the work area Fa and the travel route Rb set in the headland area Fb. The travel route Ra shown in Fig. 3 includes work routes of straight routes for traveling back and forth in parallel the work vehicle 10 in the work area Fa, and turning routes that connect the work routes. The turning route may include a straight route and a curved route, or may include only a curved route. The travel route Rb shown in Fig. 3 includes a work route of a straight route for traveling straight the work vehicle 10 in the headland area Fb. The travel route Rb may include a turning route. In addition, in Fig. 3, each travel route Rb is generated to extend to an outside of the field F. However, ends of each travel route Rb may be set on the side of the field F.

The travel route Rb of the headland area Fb may be a lap route or a back and forth route. When the travel route Rb is the lap route, the work vehicle 10 sequentially travels on the travel routes Rb from an outer peripheral side toward an inner peripheral side in one direction (clockwise or counterclockwise) along the sides A1 to A4. For example, the work vehicle 10 travels on the travel route Rb parallel to each side in the order of the left side A1, the upper side A2, the right side A3, and the lower side A4 on the outermost periphery, and then travels on the travel route Rb parallel to each side in the order of the left side A1, the upper side A2, the right side A3, and the lower side A4 on one inner side of the outermost periphery.

When the travel route Rb is a back and forth route, the work vehicle 10 travels back and forth on the plurality of travel routes Rb parallel to each side. For example, when the work vehicle 10 travels back and forth on the plurality of travel routes Rb parallel to the left side A1 in the headland area Fb on the left side A1 side and ends the work, the work vehicle moves to the upper side A2 side and travels back and forth on the plurality of travel routes Rb parallel to the upper side A2 in the headland area Fb on the upper side A2 side to perform work. In this manner, the work vehicle 10 travels back and forth and works in the headland area Fb of the respective sides in order.

The generation processing unit 212 generates the travel route Ra corresponding to the work area Fa on the basis of a size of the work area Fa, the work width W1 (see Fig. 2B), the work machine width W2 (see Fig. 2B), the work direction, a turning method, the work start position S, the work end position G, and the like.

In addition, the generation processing unit 212 generates the travel route Rb corresponding to the headland area Fb on the basis of a size of the headland area Fb (headland width), the work width W1, the work machine width W2, the work direction, and the like. For example, the generation processing unit 212 sets the left side A1 of the field F as a reference side, and generates the outermost travel route Rb parallel to the reference side (left side A1) at a position of a length of half of the work machine width W2 (W2/2) from the reference side. In addition, the generation processing unit 212 generates a second travel route Rb parallel to the reference side (left side A1) inward from the outermost travel route Rb by the work width W1. In addition, the generation processing unit 212 generates a third travel route Rb parallel to the reference side (left side A1) inward from the second travel route Rb by the work width W1. The generation processing unit 212 generates the plurality of travel routes Rb parallel to the reference side (left side A1) until the work width W1 reaches the work area Fa.

For example, the generation processing unit 212 sets the upper side A2 of the field F as a reference side, and generates the outermost travel route Rb parallel to the reference side (upper side A2) at a position of a length of half of the work machine width W2 (W2/2) from the reference side. In addition, the generation processing unit 212 generates a second travel route Rb parallel to the reference side (upper side A2) inward from the outermost travel route Rb by the work width W1. Further, the generation processing unit 212 generates a third travel route Rb parallel to the reference side (upper side A2) inward from the second travel route Rb by the work width W1. The generation processing unit 212 generates the plurality of travel routes Rb parallel to the reference side (upper side A2) until the work width W1 reaches the work area Fa.

For example, the generation processing unit 212 sets the right side A3 of the field F as a reference side, and generates the outermost travel route Rb parallel to the reference side (right side A3) at a position of a length of half of the work machine width W2 (W2/2) from the reference side. In addition, the generation processing unit 212 generates a second travel route Rb parallel to the reference side (right side A3) inward from the outermost travel route Rb by the work width W1. Further, the generation processing unit 212 generates a third travel route Rb parallel to the reference side (right side A3) inward from the second travel route Rb by the work width W1. The generation processing unit 212 generates the plurality of travel routes Rb parallel to the reference side (right side A3) until the work width W1 reaches the work area Fa.

For example, the generation processing unit 212 sets the lower side A4 of the field F as a reference side, and generates the outermost travel route Rb parallel to the reference side (lower side A4) at a position of a length of half of the work machine width W2 (W2/2) from the reference side. In addition, the generation processing unit 212 generates a second travel route Rb parallel to the reference side (lower side A4) inward from the outermost travel route Rb by the work width W1. Further, the generation processing unit 212 generates a third travel route Rb parallel to the reference side (lower side A4) inward from the second travel route Rb by the work width W1. The generation processing unit 212 generates the plurality of travel routes Rb parallel to the reference side (lower side A4) until the work width W1 reaches the work area Fa.

As described above, in the headland area Fb, the generation processing unit 212 generates the plurality of travel routes Rb on the basis of each of the plurality of sides (left side A1, upper side A2, right side A3, and lower side A4) forming the outer shape of the field F.

After generating the travel route R (travel routes Ra and Rb), the generation processing unit 212 transfers route data of the travel route R to the work vehicle 10. The generation processing unit 212 can generate and store the plurality of the travel routes R corresponding to work content for one field F.

The route data transferred from the operation terminal 20 is stored in the storage unit 12 of the work vehicle 10. As a result, the work vehicle 10 can automatically travel along the travel route R while performing positioning of the current position of the work vehicle 10 by the positioning unit 16.

The work vehicle 10 according to the present embodiment travels in the field F having a substantially rectangular shape as shown in Fig. 3. The work vehicle 10 is configured to automatically travel when the current position is located within the field F, and is configured not to automatically travel when the current position is located outside the field F (on a public road or the like). The work vehicle 10 is configured to automatically travel when the automatic traveling start condition is satisfied.

The display processing unit 213 displays the travel route R on an operation screen D2. For example, when the work vehicle 10 starts work in the work area Fa, the display processing unit 213 displays the travel route Ra corresponding to the work area Fa on the operation screen D2 as shown in Fig. 5. When displaying the travel route Ra, the display processing unit 213 may display the travel route Rb corresponding to the headland area Fb, in a different display format (for example, dotted line, thin line, and the like) from that of the travel route Ra.

In a case where the automatic traveling start condition is satisfied, when the operator presses the start button K1 on the operation screen D2 (see Fig. 5) of the operation terminal 20 to give the automatic traveling start instruction, the work vehicle 10 starts automatic traveling and work.

When the automatic traveling of the work vehicle 10 is permitted, the vehicle control device 11 causes the work vehicle 10 to automatically travel in the work area Fa along the travel route Ra. In addition, the vehicle control device 11 periodically outputs various measured values (PTO rotation speed, vehicle speed, position information, and the like) to the operation terminal 20 while the work vehicle 10 automatically travels.

When the work vehicle 10 automatically travels, the operation control unit 21 displays map information including the field F, the travel route Ra, the work start position S, the work end position G, and the current position of the work vehicle 10 on the operation screen D2 (see Fig. 5). In addition, the operation control unit 21 displays, on the operation screen D2, in addition to the map information, function icons such as a magnification icon for changing a display magnification of the map and an orientation icon for changing an orientation of the map, and display icons (notification icons) for displaying current states (measured values and the like) of items such as a driving situation, a vehicle speed situation, and a position situation of the work vehicle 10.

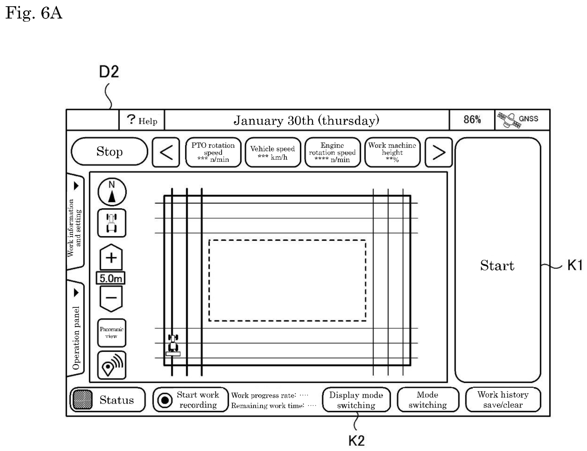

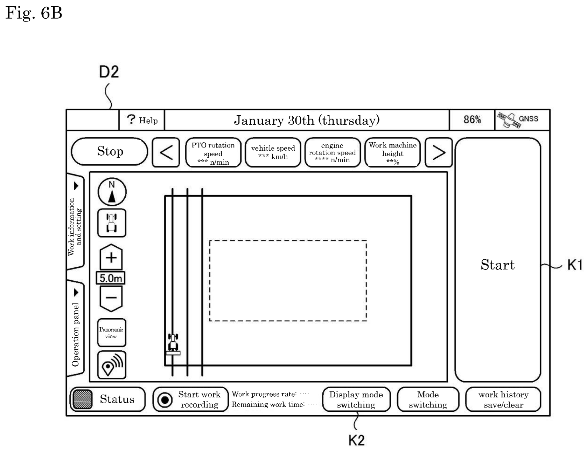

When the work vehicle 10 starts work in the headland area Fb, the display processing unit 213 displays the travel route Rb corresponding to the headland area Fb on the operation screen D2. Specifically, the display processing unit 213 sets a first display mode in which all of the plurality of travel routes Rb generated on the basis of the plurality of sides A1 to A4 forming the outer shape of the field F are displayed, or a second display mode in which specific travel routes Rb generated on the basis of a specific side among the plurality of sides A1 to A4 are displayed, and displays the travel routes Rb on the operation screen D2 on the basis of the set first display mode or the set second display mode. Fig. 6A shows a display example of the travel routes Rb when the first display mode is set, and Fig. 6B shows a display example of the travel routes Rb when the second display mode is set. When displaying the travel route Rb corresponding to the headland area Fb, the display processing unit 213 does not display the travel route Ra corresponding to the work area Fa. Note that the display processing unit 213 may display the travel route Ra in a different display format (for example, dotted line, thin line, and the like) from that of the travel route Rb. A specific example of a method for displaying the travel route Rb will be described below.

### <Method for displaying travel route Rb>

The display processing unit 213 sets the first display mode or the second display mode on the basis of work information related to work that the work vehicle 10 performs while automatically traveling. Specifically, the display processing unit 213 acquires work information such as work content registered by an operation of the operator and a type of the work machine 14. In addition, the display processing unit 213 may acquire work information output from the work machine 14 or the outside. The display processing unit 213 sets the first display mode or the second display mode on the basis of the acquired work information, and displays the travel route Rb on the basis of the set display mode.

For example, when work content is tilling work, the work vehicle 10 performs work while circling around the headland area Fb along the outer periphery of the field F. Therefore, the display processing unit 213 sets the first display mode so that the operator can easily grasp the lap route, and displays all the travel routes Rb of the headland area Fb of the respective sides A1 to A4 together (see Fig. 6A).

On the other hand, for example, when the work content is harvest work (for example, potato harvest, crop harvest on ridges) or ridging work, the work vehicle 10 performs work while traveling back and forth in the headland area Fb for each side. Therefore, the display processing unit 213 sets the second display mode so that the operator can easily grasp the back and forth route of each side, and displays only the travel routes Rb of the headland area Fb of a specific side (see Fig. 6B).

In addition, when the work machine 14 is provided to coincide with a center position of the work vehicle 10 (see Fig. 2B), since the work vehicle 10 performs work while circling around the headland area Fb along the outer periphery of the field F relatively often, the display processing unit 213 sets the first display mode and displays all the travel routes Rb of the headland area Fb of the respective sides A1 to A4 together (see Fig. 6A).

On the other hand, when the work machine 14 is provided offset in a lateral direction with respect to the center position of the work vehicle 10 (see Fig. 2C), since the work vehicle 10 performs work while traveling back and forth in the headland area Fb for each side relatively often, the display processing unit 213 sets the second display mode and displays only the travel routes Rb of the headland area Fb of a specific side (see Fig. 6B).

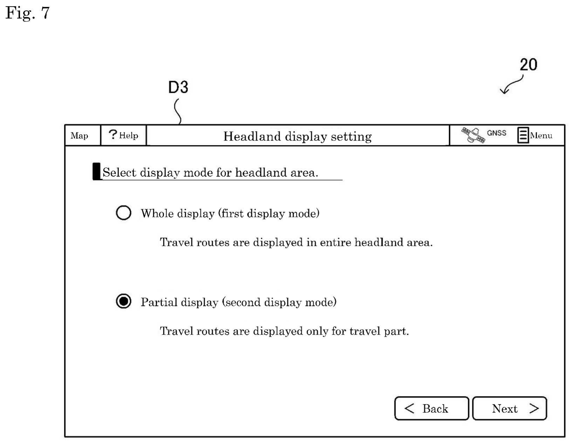

As another embodiment, the display processing unit 213 may set the first display mode or the second display mode on the basis of a selection operation of the operator. For example, in a setting screen D3 shown in Fig. 7, the operator may be able to set the first display mode ("whole display") or the second display mode ("partial display") in advance. Further, the operator may be able to switch between the first display mode and the second display mode on the setting screen D3 after starting the automatic traveling (during the automatic traveling).

In addition, the operator may be able to switch between the first display mode and the second display mode on the operation screen D2 shown in Figs. 6A and 6B. For example, when the operator presses a display mode switching button K2 on the operation screen D2 in the first display mode shown in Fig. 6A, the display processing unit 213 performs switching to the operation screen D2 in the second display mode shown in Fig. 6B. When the operator presses the display mode switching button K2 on the operation screen D2 in the second display mode shown in Fig. 6B, the display processing unit 213 performs switching to the operation screen D2 in the first display mode shown in Fig. 6A. The display processing unit 213 may not display the display mode switching button K2 when the work vehicle 10 travels in the work area Fa (see Fig. 5), and may display the display mode switching button K2 when the work vehicle 10 travels in the headland area Fb (see Figs. 6A and 6B). Further, the operator may be able to switch between the first display mode and the second display mode by the display mode switching button K2 on the operation screen D2 after starting the automatic traveling (during the automatic traveling).

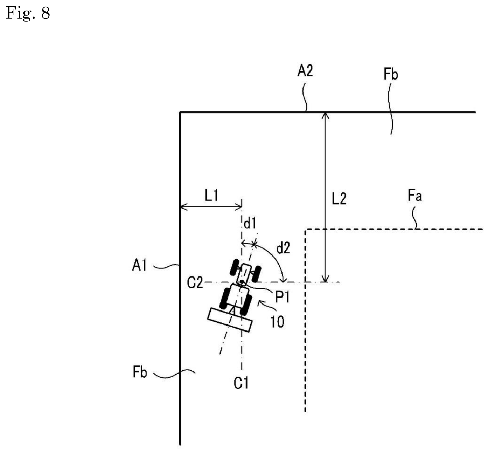

Here, the "specific side" is a side (first reference side) set on the basis of at least one of the current position and a current bearing of the work vehicle 10 among the plurality of sides. For example, as shown in Fig. 8, the display processing unit 213 compares a distance L1 from a current position P1 of the work vehicle 10 to the left side A1 with a distance L2 from the current position P1 of the work vehicle 10 to the upper side A2, and sets the left side A1 as the first reference side when the distance L1 is shorter than the distance L2, and sets the upper side A2 as the first reference side when the distance L2 is shorter than the distance L1.

As another embodiment, the display processing unit 213 may compare an angle d1 with respect to an extending direction (straight line C1) of the left side A1 at the current position P1 of the work vehicle 10 with an angle d2 with respect to an extending direction (straight line C2) of the upper side A2, and set the left side A1 as the first reference side when the angle d1 is smaller than the angle d2, and set the upper side A2 as the first reference side when the angle d2 is smaller than the angle d1.

As another embodiment, the display processing unit 213 may set the left side A1 as the first reference side when the distance L1 is shorter than the distance L2 and the angle d1 is smaller than the angle d2, and set the upper side A2 as the first reference side when the distance L2 is smaller than the distance L1 and the angle d2 is smaller than the angle d1.

When a specific side (first reference side) among the sides A1 to A4 is set, the display processing unit 213 displays, on the operation screen D2, the travel routes Rb generated on the basis of the first reference side, that is, the travel routes Rb parallel to the first reference side in the headland area Fb including the first reference side. The display processing unit 213 does not display the travel routes Rb generated on the basis of the other sides except the first reference side on the operation screen D2. In an example shown in Fig. 8, as shown in Fig. 6B, the display processing unit 213 displays the travel routes Rb corresponding to the left side A1 as the first reference side and does not display the travel routes Rb corresponding to each of the upper side A2, the right side A3, and the lower side A4, on the operation screen D2.

As described above, in the first display mode, the display processing unit 213 displays the travel routes Rb corresponding to the respective sides A1 to A4 in the headland area Fb, and in the second display mode, the display processing unit display the travel routes Rb corresponding to a specific side (first reference side) and does not display the travel routes Rb corresponding to the other sides in the headland area Fb. As a result, the display mode is set according to operator's intention, work content, and the like, and the travel route Rb is displayed according to the set display mode. Therefore, work efficiency of the operator who performs work (manual steering or the like) while looking at the display of the travel route Rb can be improved.

### <Specific examples of method for displaying travel route Rb>

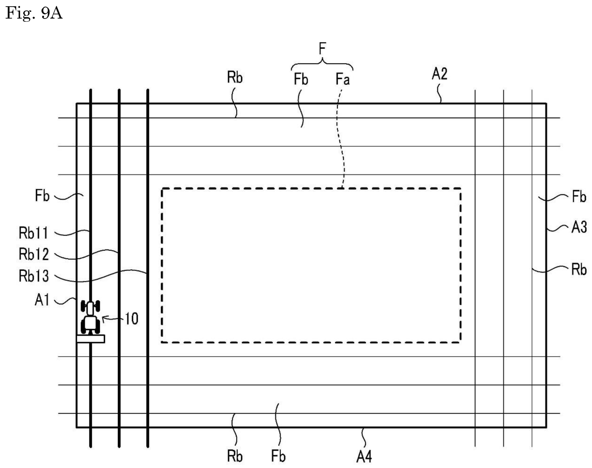

Figs. 9A to 9C show specific examples of the display method of the travel routes Rb in the first display mode. When the first display mode is set, the display processing unit 213 displays, in different display formats, the travel routes Rb generated on the basis of a side (first reference side) set on the basis of at least one of the current position and the current bearing of the work vehicle 10 among the plurality of sides, and the travel routes Rb generated on the basis of the other sides among the plurality of sides. Specifically, as shown in Fig. 9A, the display processing unit 213 displays the travel routes Rb corresponding to the respective sides A1 to A4 together, and displays the travel routes Rb generated on the basis of the left side A1 as the first reference side according to the current position and the current bearing of the work vehicle 10 and the travel routes Rb generated on the basis of each of the upper side A2, the right side A3, and the lower side A4, in different display formats. For example, the display processing unit 213 highlights (thick line, color solid line, and the like) travel routes Rb11 to Rb13 generated on the basis of the left side A1.

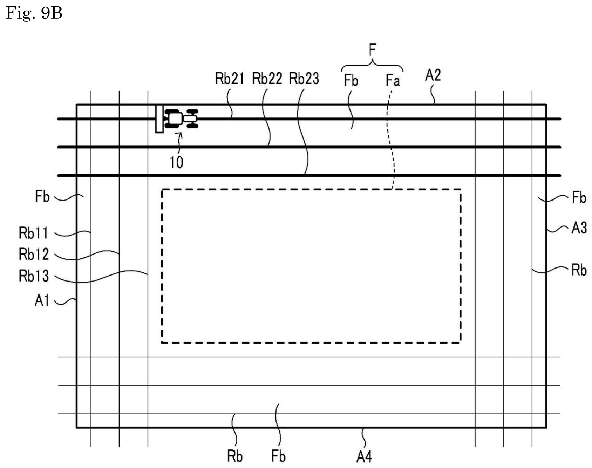

In the first display mode, for example, when the work vehicle 10 ends work on the travel routes Rb11 to Rb13 corresponding to the left side A1 and moves to the upper side A2 side in accordance with manual steering of the operator, the display processing unit 213 changes the display format of the travel routes Rb. For example, when the distance L2 (see Fig. 8) of the work vehicle 10 is smaller than the distance L1 and the angle d2 is smaller than the angle d1, the display processing unit 213 changes the first reference side to the upper side A2. Then, as shown in Fig. 9B, the display processing unit 213 highlights travel routes Rb21 to Rb23 generated on the basis of the upper side A2, and returns the travel routes Rb11 to Rb13 corresponding to the left side A1 to a normal display format. As described above, in the first display mode, the display processing unit 213 changes the display format of the travel routes Rb according to the current position and the current bearing of the work vehicle 10, while displaying the travel routes Rb corresponding to the respective sides A1 to A4 together.

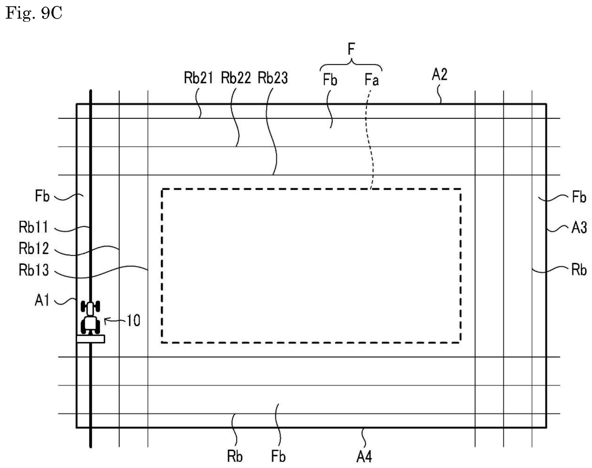

As another embodiment, the display processing unit 213 may highlight only the travel route Rb on which the work vehicle 10 is currently traveling among the plurality of travel routes Rb corresponding to the first reference side. For example, as shown in Fig. 9C, when the left side A1 is set as the first reference side, the display processing unit 213 highlights only the travel route Rb11 on which the work vehicle 10 is currently traveling. When the work vehicle 10 ends the work on the travel route Rb11 and the operator moves the work vehicle 10 to the travel route Rb12 by manual steering, the display processing unit 213 returns the travel route Rb11 to a normal display state and highlights only the travel route Rb12. When the work vehicle 10 ends the work on the travel route Rb13 and the operator moves the work vehicle 10 toward the upper side A2 by manual steering, the display processing unit 213 returns the travel route Rb13 to a normal display state and highlights only the travel route Rb21 corresponding to the upper side A2.

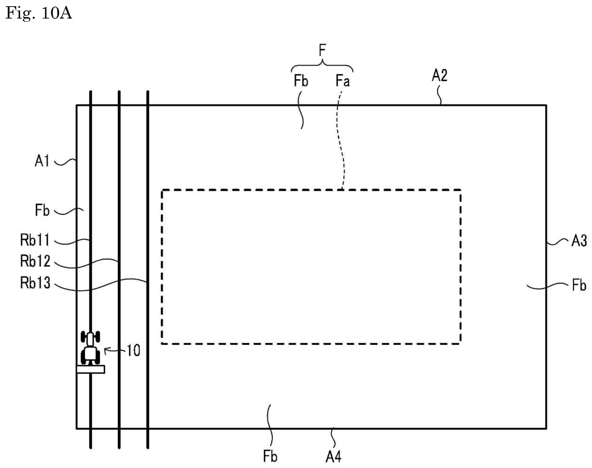

Figs. 10A to 10C show specific examples of the display method of the travel route Rb in the second display mode. When the second display mode is set, the display processing unit 213 displays only the travel route Rb generated on the basis of a side (first reference side) set on the basis of at least one of the current position and the current bearing of the work vehicle 10. Specifically, as shown in Fig. 10A, the display processing unit 213 displays only the travel routes Rb11 to Rb13 generated on the basis of the left side A1 as the first reference side according to the current position and the current bearing of the work vehicle 10, and does not display the travel routes Rb corresponding to each of the upper side A2, the right side A3, and the lower side A4.

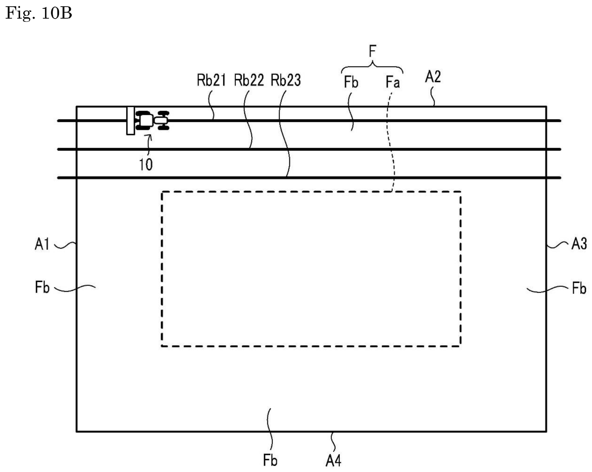

In the second display mode, for example, when the work vehicle 10 ends the work on the travel routes Rb11 to Rb13 corresponding to the left side A1, moves to the upper side A2 side in accordance with manual steering of the operator, and the distance L2 (see Fig. 8) becomes smaller than the distance L1 and the angle d2 becomes smaller than the angle d1, the display processing unit 213 changes the first reference side to the upper side A2. Then, as shown in Fig. 10B, the display processing unit 213 does not display the travel routes Rb11 to Rb13 and displays only the travel routes Rb21 to Rb23 generated on the basis of the upper side A2. As described above, in the second display mode, the display processing unit 213 displays only the travel routes Rb corresponding to the first reference side according to the current position and the current bearing of the work vehicle 10.

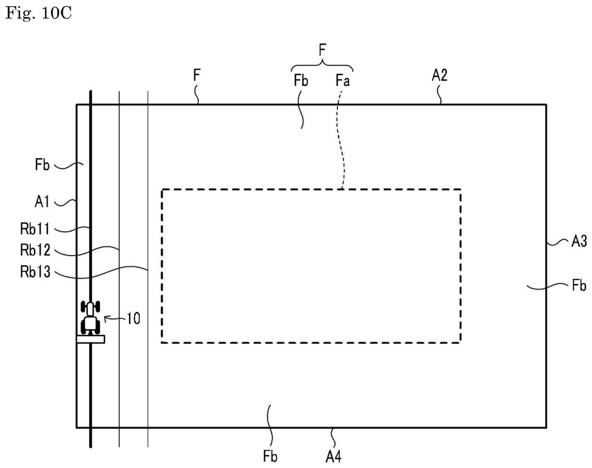

As another embodiment, the display processing unit 213 may highlight only the travel route Rb on which the work vehicle 10 is currently traveling, similarly to the first display mode (see Fig. 9C). For example, as shown in Fig. 10C, when the left side A1 is set as the first reference side, the display processing unit 213 highlights only the travel route Rb11 on which the work vehicle 10 is currently traveling. When the work vehicle 10 ends the work on the travel route Rb11 and the operator moves the work vehicle 10 to the travel route Rb12 by manual steering, the display processing unit 213 returns the travel route Rb11 to a normal display state and highlights only the travel route Rb12. When the work vehicle 10 ends the work on the travel route Rb13 and the operator moves the work vehicle 10 to the upper side A2 side by manual steering, the display processing unit 213 does not display the travel routes Rb11 to Rb13, displays the travel routes Rb21 to Rb23 corresponding to the upper side A2, and highlights the travel route Rb21.

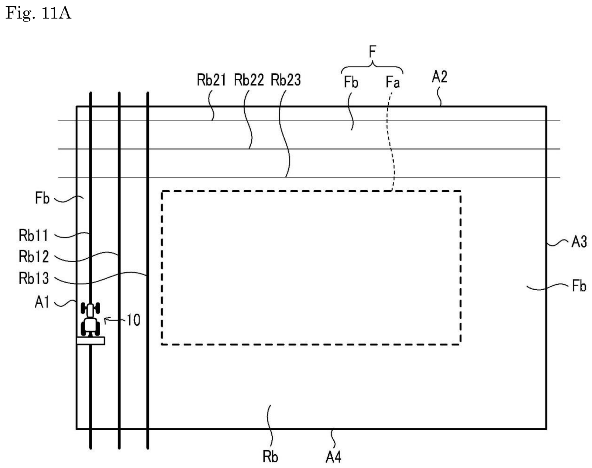

As another embodiment, in the second display mode, a specific side may include the first reference side and a second reference side that is a side set next to the first reference side. For example, as shown in Fig. 11A, when the left side A1 is set as the first reference side on the basis of the current position and the current bearing of the work vehicle 10, the display processing unit 213 sets the upper side A2 (side corresponding to the travel route Rb in headland area Fb, on which the work vehicle is to travel next to the travel route Rb corresponding to first reference side) set next to the first reference side as the second reference side. Then, the display processing unit 213 displays the travel routes Rb generated on the basis of the first reference side and the travel routes Rb generated on the basis of the second reference side. Here, the display processing unit 213 displays the travel routes Rb11 to Rb13 corresponding to the left side A1 as the first reference side, and the travel routes Rb21 to Rb23 corresponding to the upper side A2 as the second reference side, and does not display the travel routes Rb corresponding to each of the right side A3 and the lower side A4.

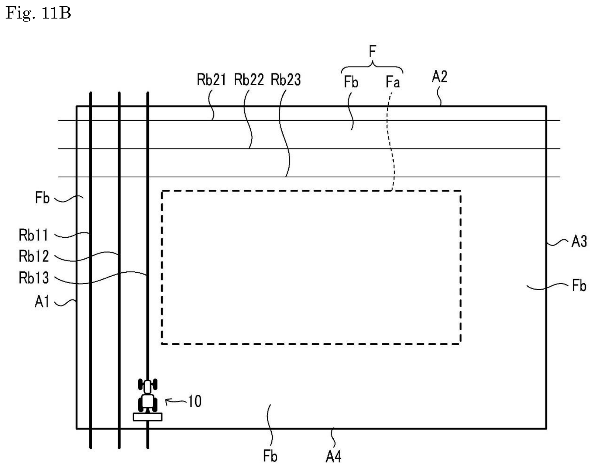

Note that, in an example shown in Fig. 11A, the display processing unit 213 displays the travel routes Rb11 to Rb13 and the travel routes Rb21 to Rb23 when the work vehicle 10 starts traveling in the headland area Fb corresponding to the left side A1. However, as another embodiment, as shown in Fig. 11B, the display processing unit 213 may display only the travel routes Rb11 to Rb13 when the work vehicle 10 starts traveling in the headland area Fb corresponding to the left side A1, and may display the next travel routes Rb21 to Rb23 when the work vehicle starts traveling on the travel route Rb13 that is the last route in the headland area Fb corresponding to the left side A1. That is, the display processing unit 213 may display the travel routes Rb generated on the basis of the second reference side when the work vehicle 10 travels on the last travel route Rb among the travel routes Rb generated on the basis of the first reference side.

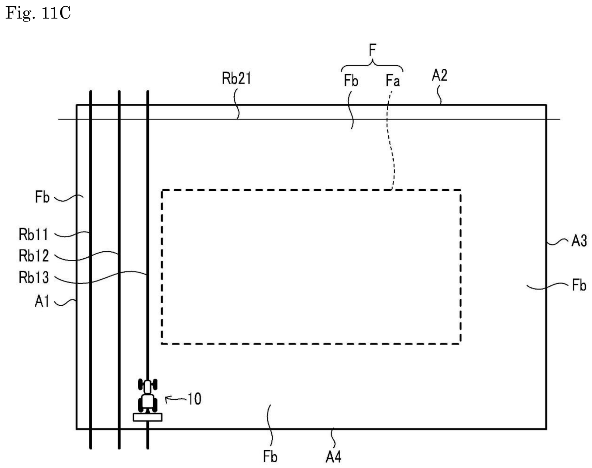

As shown in Fig. 11C, when the work vehicle 10 travels on the last travel route Rb13 among the travel routes Rb11 to Rb13 corresponding to the left side A1, the display processing unit 213 may display only the first travel route Rb21 among the travel routes Rb21 to Rb23 corresponding to the upper side A2. In addition, the display processing unit 213 may highlight the travel route Rb21 among the travel routes Rb21 to Rb23 when the work vehicle travels on the travel route Rb13.

The operation terminal 20 may be able to access a website (agricultural support site) of an agricultural support service provided by a server (not shown) via the communication network N1. In this case, the operation terminal 20 can function as an operation terminal of the server by executing a browser program by the operation control unit 21. Then, the server includes the processing units described above and executes each piece of processing.

### [Automatic traveling processing]

Hereinafter, an example of the automatic traveling processing executed by the automatic traveling system 1 will be described with reference to Fig. 12.

The present invention can be understood as an invention of an automatic traveling method for executing one or a plurality of steps included in the automatic traveling processing. Furthermore, the one or the plurality of steps included in the automatic traveling processing described here may be appropriately omitted. Note that an execution order of each step in the automatic traveling processing may be different within a range in which similar operational effects are produced. Furthermore, here, a case where the vehicle control device 11 and the operation control unit 21 execute each step in the automatic traveling processing will be described as an example, but an automatic traveling method in which one or a plurality of processors execute each step in the automatic traveling processing in a dispersed manner is also considered as another embodiment.

Here, it is assumed that the travel route Ra of the work area Fa and the travel route Rb of the headland area Fb are set and registered in advance with respect to the field F formed by the outer shape sides of the sides A1 to A4 (see Fig. 3). The work vehicle 10 automatically travels along the travel route R (target route) including the travel route Ra and the travel route Rb in the field F.

### <Step S1>

In step S1, the operation control unit 21 and the vehicle control device 11 determine whether or not to start work in the work area Fa. For example, the operator manually travels the work vehicle 10 by manual steering to move the work vehicle to the work start position S in the work area Fa, and presses the start button K1 when the automatic traveling start condition is satisfied (see Fig. 5). When receiving the pressing operation of the start button K1, the operation control unit 21 transmits the automatic traveling start instruction to the work vehicle 10. When the operation control unit 21 and the vehicle control device 11 determine that work in the work area Fa is started (S1: Yes), the operation control unit 21 and the vehicle control device 11 shift the processing to step S2. The operation control unit 21 and the vehicle control device 11 continue the determination processing in step S1 until it is determined that the work in the work area Fa is started (for example, until the operation control unit 21 receives the pressing operation of the start button K1 from the operator) (S1: No).

### <Step S2>

In step S2, the vehicle control device 11 starts automatic traveling of the work vehicle 10. When the automatic traveling is started, the vehicle control device 11 causes the work vehicle 10 to perform work while causing the work vehicle to automatically travel from the work start position S to the work end position G along the travel route Ra of the work area Fa. The operation control unit 21 displays the travel route Ra, the travel situation, the work situation, and the like on the operation screen D2 while the work vehicle 10 automatically travels (see Fig. 5).

### <Step S3>

In step S3, the vehicle control device 11 determines whether or not the work vehicle 10 has reached the work end position G. When determining that the work vehicle 10 has reached the work end position G (S3: Yes), the vehicle control device 11 shifts the processing to step S4. The vehicle control device 11 continues the automatic traveling processing until the work vehicle 10 reaches the work end position G (S3: No).

### <Step S4>

In step S4, the operation control unit 21 determines whether or not to start work in the headland area Fb. For example, when the operator selects to perform the work in the headland area Fb on the operation screen D2, the operation control unit 21 determines to start the work in the headland area Fb (S4: Yes), and shifts the processing to step S5. On the other hand, for example, when the operator selects to end the work (not to work in the headland area Fb) on the operation screen D2, the operation control unit 21 determines not to work in the headland area Fb (S4: No), and ends the automatic traveling processing.

The operator may select in advance whether or not to perform the work in the headland area Fb before starting the automatic traveling in the work area Fa.

### <Step S5>

In step S5, the operation control unit 21 sets the display mode of the travel route Rb in the headland area Fb. Specifically, the operation control unit 21 sets the first display mode in which all of the plurality of travel routes Rb generated on the basis of the plurality of sides A1 to A4 forming the outer shape of the field F are displayed (see Fig. 6A), or the second display mode in which specific travel routes Rb generated on the basis of a specific side among the plurality of sides A1 to A4 are displayed (see Fig. 6B).

For example, the operation control unit 21 sets the first display mode or the second display mode on the basis of the work information such as the work content acquired by a registration operation of the operator and the type of the work machine 14. As another embodiment, the operation control unit 21 may acquire the work information output from the work machine 14 or the outside.

Furthermore, the operation control unit 21 may set the first display mode or the second display mode on the basis of the selection operation of the operator (see Fig. 7).

### <Step S6>

In step S6, the operation control unit 21 displays the travel routes Rb in the headland area Fb on the basis of the set display mode. When the display mode is set to the first display mode, the operation control unit 21 displays all the travel routes Rb generated on the basis of the respective sides A1 to A4 on the operation screen D2 as shown in Fig. 6A. In the first display mode, the operation control unit 21 displays the travel routes Rb generated on the basis of a specific side (left side A1 in Fig. 9A) as the first reference side according to the current position and the current bearing of the work vehicle 10, and the travel routes Rb generated on the basis of each of the other sides (upper side A2, right side A3, and lower side A4) in different display formats.

On the other hand, when the display mode is set to the second display mode, the operation control unit 21 displays only specific travel routes Rb (the travel routes Rb11 to Rb13 in Fig. 10A) generated on the basis of a specific side (for example, the left side A1) among the plurality of sides A1 to A4 on the operation screen D2 as shown in Fig. 6B. In the second display mode, the operation control unit 21 may display the travel routes Rb11 to Rb13 corresponding to the left side A1 set as the first reference side and the travel routes Rb21 to Rb23 corresponding to the upper side A2 set as the second reference side next to the first reference side (see Fig. 11A).

When the work in the headland area Fb is performed, the vehicle control device 11 causes the work vehicle 10 to automatically travel along the travel route Rb (straight route), and to manually travel (turn and travel) between the travel routes Rb according to manual steering of the operator.

### <Step S7>

In step S7, the operation control unit 21 determines whether or not the work of the work vehicle 10 has ended. For example, when the operator performs an operation to end the work on the operation screen D2, the operation control unit 21 determines that the work of the work vehicle 10 has ended and ends the automatic traveling processing (S7: Yes). On the other hand, when the operator does not perform the operation to end the work on the operation screen D2 (S7: No), the operation control unit 21 shifts the processing to step S5 and continues the setting processing of the display mode (S5) and the display processing of the travel routes Rb (S6). For example, when the processing returns to step S5, the operation control unit 21 switches the display mode when receiving the pressing operation of the display mode switching button K2 on the operation screen D2 (Figs. 6A and 6B) from the operator. For example, when the operator presses the display mode switching button K2 while the travel routes Rb are being displayed in the first display mode (see Fig. 6A), the operation control unit 21 switches the display mode to the second display mode (see Fig. 6B). On the other hand, when the operator presses the display mode switching button K2 while the travel routes Rb are being displayed in the second display mode (see Fig. 6B), the operation control unit 21 switches the display mode to the first display mode (see Fig. 6A). The operator can appropriately switch between the first display mode and the second display mode while the work vehicle 10 travels in the headland area Fb.

The operation control unit 21 and the vehicle control device 11 repeatedly execute the above-described pieces of processing until the work of the work vehicle 10 ends. As described above, the automatic traveling system 1 executes the automatic traveling processing.

As described above, the automatic traveling system 1 according to the present embodiment is a route display system for displaying on the operation terminal 20 the travel routes R (target route) for automatically traveling the work vehicle 10. The automatic traveling system 1 sets the first display mode in which all of the plurality of travel routes generated on the basis of the plurality of sides forming the outer shape of the field F (travel area) are displayed or the second display mode in which specific travel routes generated on the basis of a specific side (first reference side) among the plurality of sides are displayed, and displays the travel routes on the operation terminal 20 on the basis of the set first display mode or the set second display mode.

For example, the automatic traveling system 1 sets the first display mode in which all of the plurality of travel routes Rb generated on the basis of the plurality of sides A1 to A4 forming the outer shape of the field F are displayed (see Fig. 9A), or the second display mode in which the specific travel routes Rb11 to Rb13 generated on the basis of a specific side (for example, the left side A1) among the sides A1 to A4 are displayed (see Fig. 10A). As described above, since the automatic traveling system 1 includes the first display mode and the second display mode, for example, any display mode can be set according to operator's intention, work content, or the like. As a result, the operator can perform work while looking at the travel routes corresponding to the set display mode, so that work efficiency of the operator can be improved.

### [Other embodiments]

The present invention is not limited to the above-described embodiment. Other embodiments of the present invention are described below.

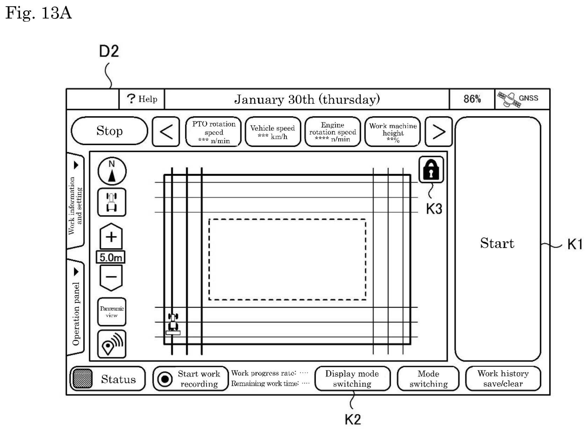

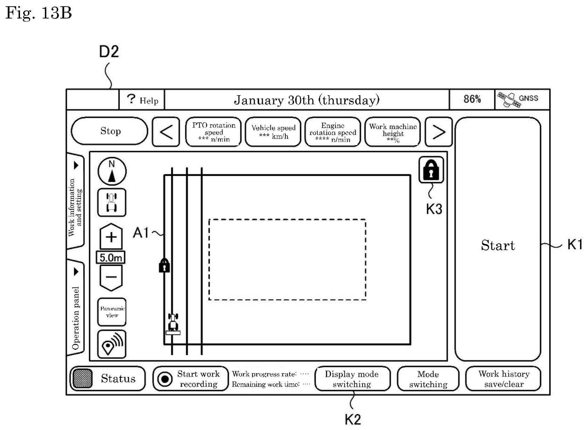

The operation control unit 21 may have a function (side lock function) for fixing the travel routes Rb to be displayed. For example, in the operation screen D2 shown in Fig. 13A, in a case where the display mode is set to the first display mode, when the operator presses a side lock button K3, the operation control unit 21 receives the selection operation of the side from the operator. For example, when the operator selects the left side A1 as shown in Fig. 13B, the operation control unit 21 fixes the left side A1 and displays only the travel routes Rb generated on the basis of the left side A1. That is, when receiving the pressing operation of the side lock button K3 in the first display mode, the operation control unit 21 performs switching to the second display mode and fixedly displays the travel routes Rb corresponding to the side selected by the operator. In the side lock function, the operation control unit 21 displays the travel routes Rb corresponding to the side (here, left side A1) selected by the operator regardless of the current position and the current bearing of the work vehicle 10. When the operator presses the side lock button K3 again, the side lock function becomes invalid (fixed display is released), and the operation control unit 21 displays the travel routes Rb on the basis of the first reference side set according to the current position and the current bearing of the work vehicle 10.

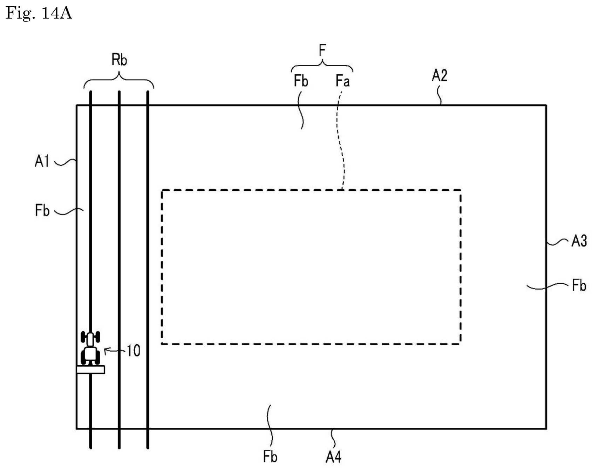

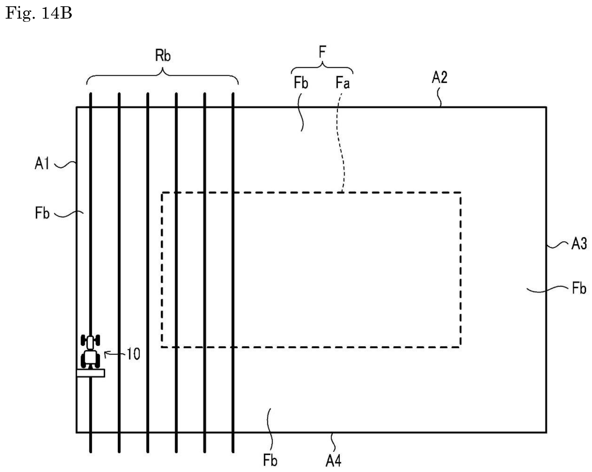

As another embodiment of the present invention, when the second display mode is set, the operation control unit 21 may be capable of setting a third display mode in which the travel routes Rb are displayed in the headland area Fb and the travel routes Rb are not displayed in the work area Fa, or a fourth display mode in which the travel routes Rb are displayed in the headland area Fb and the travel routes Rb are displayed in a part of the work area Fa. For example, in the third display mode, as shown in Fig. 14A, the operation control unit 21 displays the travel routes Rb corresponding to the left side A1 only in the headland area Fb. On the other hand, in the fourth display mode, as shown in Fig. 14B, the operation control unit 21 displays the travel routes Rb corresponding to the left side A1 in the headland area Fb and the part of the work area Fa. The operation control unit 21 may display the travel routes Rb corresponding to the left side A1 in the headland area Fb and the entire work area Fa. As a result, the operator can perform work not only in the headland area Fb but also in the work area Fa using the travel routes Rb parallel to the outer shape side of the field F. The operator may be able to set the number of travel routes Rb to be displayed in the work area Fa. Further, the operation control unit 21 may display the travel routes Rb to be displayed in the headland area Fb, and the travel route Rb to be displayed in the work area Fa in different display formats, among the travel routes Rb.

As another embodiment of the present invention, when the work machine 14 is provided offset in the lateral direction with respect to the center position of the work vehicle 10 (see Fig. 2C), the operation control unit 21 may change the display method of the travel routes Rb according to the travel direction of the work vehicle 10. In an example shown in Fig. 2C, the work machine 14 is provided such that a center position C4 thereof is offset from a center position C1 of a vehicle body by a distance X1 (offset amount).

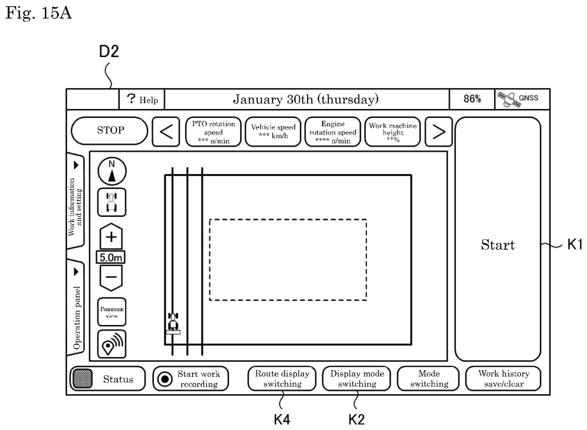

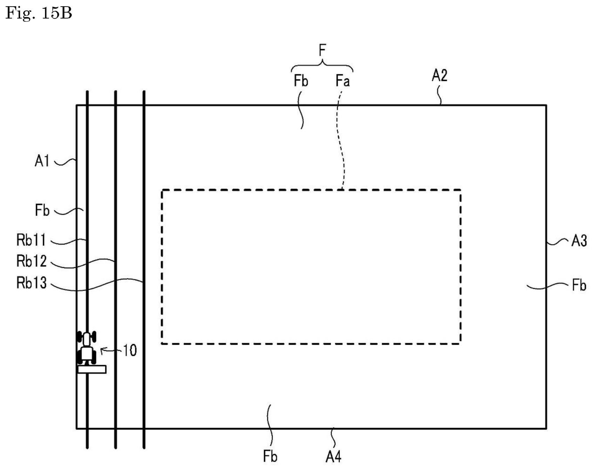

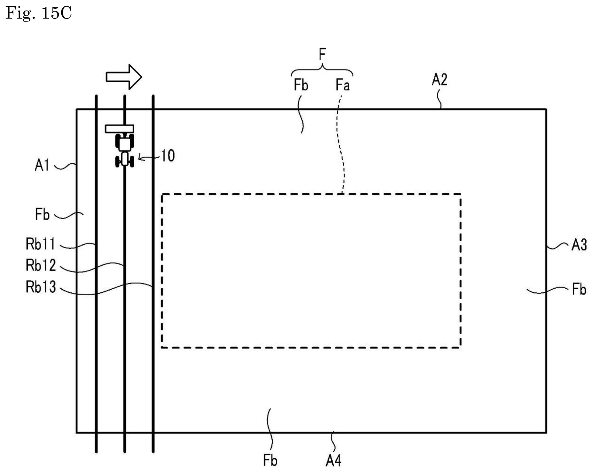

Specifically, when the second display mode is set and a display switching operation by the operator is received, the operation control unit 21 translates a display position of the travel route Rb by a distance corresponding to the offset amount and displays the translated travel route Rb. For example, when the operator presses a route display switching button K4 (see Fig. 15A) on the operation screen D2 while the travel routes Rb11 to Rb13 shown in Fig. 15B are displayed, the operation control unit 21 translates the travel routes Rb by a distance corresponding to the offset amount X1 as shown in Fig. 15C. For example, the operation control unit 21 translates the travel routes Rb to the right so as to be aligned with the center position (travel position) of the vehicle body of the work vehicle 10 when a travel direction is switched from upward (see Fig. 15B) to downward (see Fig. 15C). When the operator presses the route display switching button K4 (see Fig. 15A) again, the operation control unit 21 translates the travel routes Rb in the opposite direction (here, the left side) to return them to the state shown in Fig. 15B. In this manner, the operation control unit 21 may switch the display position (Figs. 15B and 15C) of the travel route Rb according to the pressing operation of the route display switching button K4 by the operator.

As another embodiment, the operation control unit 21 may switch the display position (Figs. 15B and 15C) of the travel route Rb on the basis of the travel direction or the current bearing of the work vehicle 10. Specifically, the operation control unit 21 displays the travel routes Rb shown in Fig. 15B when the current bearing of the work vehicle 10 is upward, and displays the travel routes Rb shown in Fig. 15C when the current bearing of the work vehicle 10 is downward.

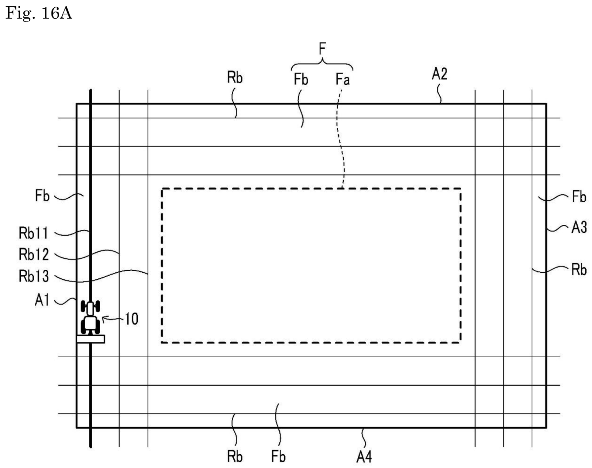

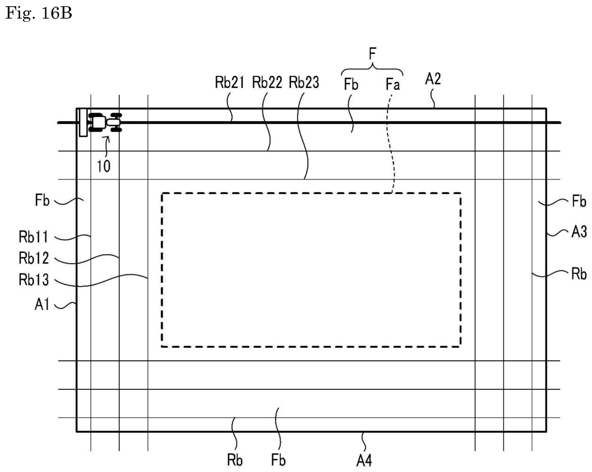

As another embodiment, the display processing unit 213 may display a travel route satisfying the automatic traveling start condition and a travel route not satisfying the automatic traveling start condition in different display formats. For example, in the first display mode (see Fig. 6A), as shown in Fig. 16A, the display processing unit 213 displays the travel routes Rb corresponding to the respective sides A1 to A4 together, and highlights (thick line, color solid line, and the like) the travel route Rb11 in which the current position and the current bearing of the work vehicle 10 satisfy the automatic traveling start condition among the travel routes Rb. When the work vehicle 10 ends the automatic traveling and the work on the travel route Rb11 and moves to the upper side A2 side in accordance with manual steering by the operator, the display processing unit 213 highlights the travel route Rb21 in which the work vehicle 10 satisfies the automatic traveling start condition among the travel routes Rb as shown in Fig. 16B.

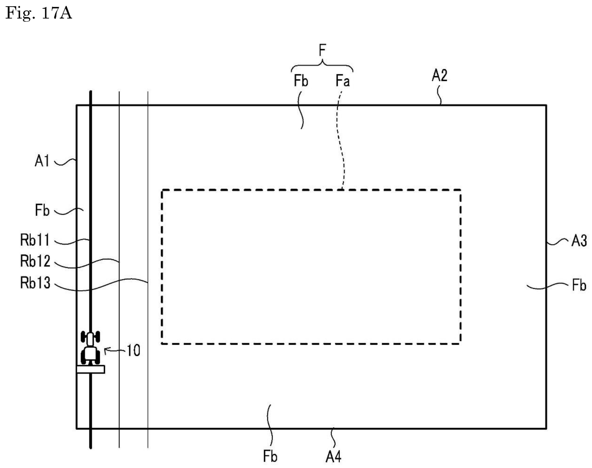

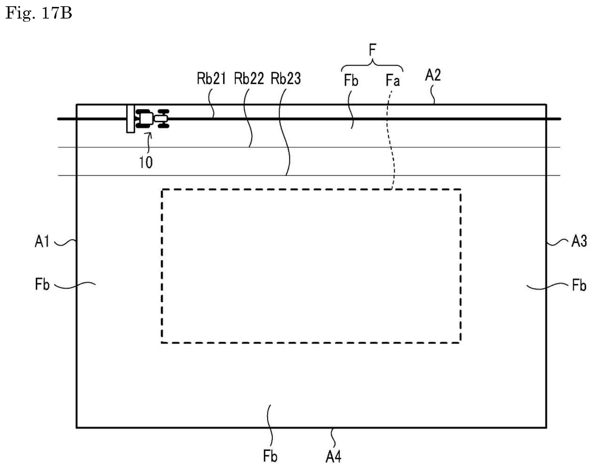

Similarly, in the second display mode (see Fig. 6B), as shown in Fig. 17A, the display processing unit 213 displays the travel routes Rb11 to Rb13 corresponding to the left side A1 together, and highlights the travel route Rb11 in which the work vehicle 10 satisfies the automatic traveling start condition among the travel routes Rb11 to Rb13. When the work vehicle 10 ends the automatic traveling and the work of the travel routes Rb11 to Rb13 and moves to the upper side A2 side in accordance with manual steering of the operator, the display processing unit 213 displays the travel routes Rb21 to Rb23 corresponding to the upper side A2 together as shown in Fig. 17B, and highlights the travel route Rb21 in which the work vehicle 10 satisfies the automatic traveling start condition among the travel routes Rb21 to Rb23.

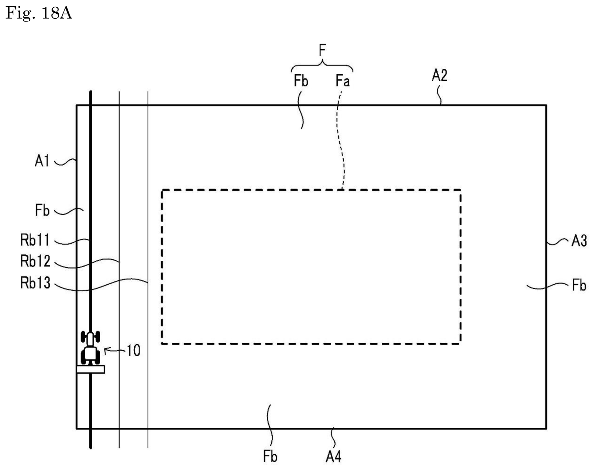

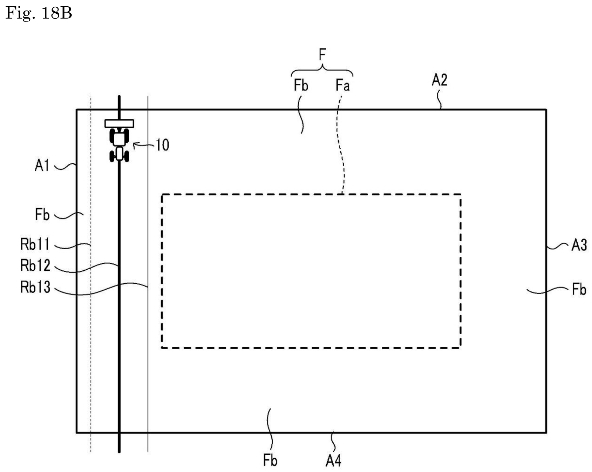

As another embodiment, the display processing unit 213 may change a format of the travel route on which the work vehicle 10 has ended the automatic traveling or the work to a format that is less noticeable than the travel route on which the work vehicle 10 has not ended the automatic traveling or the work. For example, in a case where the work vehicle 10 travels back and forth (travels back and forth while working) on the travel routes Rb11 to Rb13 shown in Fig. 18A, in this order, when the work vehicle 10 ends the automatic traveling and the work on the travel route Rb11, the display processing unit 213 displays the travel route Rb11 in a light color or a dotted line, or deletes (does not display) the travel route Rb11 as shown in Fig. 18B. Note that the display processing unit 213 changes the display format of the travel route Rb11 when it is detected that the work vehicle 10 has stopped or when it is detected that the work machine 14 has moved (lifted) to a non-work position. The above configuration is also applicable to the first display mode.

As another embodiment, the display processing unit 213 may highlight a travel route adjacent to a travel route on which the work vehicle 10 has ended the automatic traveling or the work. For example, when the work vehicle 10 ends the automatic traveling and the work on the travel route Rb11 in the travel routes Rb11 to Rb13 shown in Fig. 18A, the display processing unit 213 highlights the travel route Rb12 adjacent to the travel route Rb11 as shown in Fig. 18B. When there are travel routes on both sides of the travel route on which the work vehicle 10 has ended the automatic traveling or the work, the display processing unit 213 may highlight the travel routes on both sides.

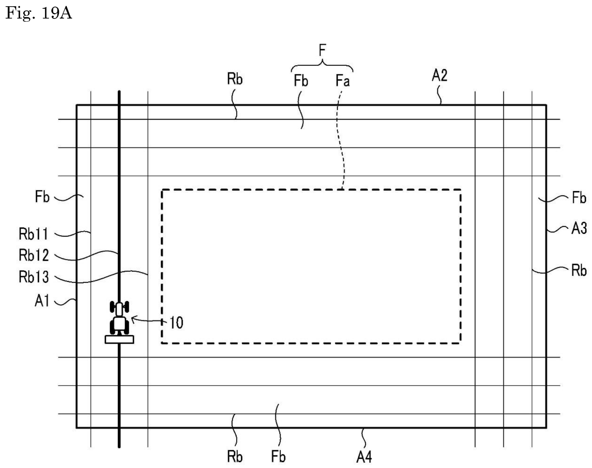

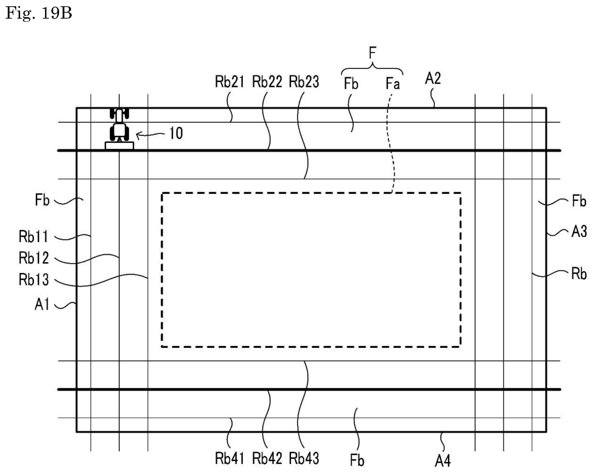

As another embodiment, the display processing unit 213 may highlight a travel route corresponding to a side connected to a reference side of a travel route on which the work vehicle 10 has ended the automatic traveling or the work. For example, as shown in Figs. 19A and 19B, when the work vehicle 10 ends the automatic traveling and the work on the travel route Rb12 of the left side A1 as the first reference side, the display processing unit 213 highlights the travel routes corresponding to the upper side A2 and the lower side A4 connected to the left side A1. In addition, the display processing unit 213 highlights the same lap (process) route as the travel route on which the automatic traveling and the work has ended. In examples shown in Figs. 19A and 19B, since the travel route Rb12 is the travel route of the second turn (the second process), the display processing unit 213 highlights the travel route Rb22 of the second turn among the travel routes Rb21 to Rb23 along the upper side A2 and a travel route Rb42 of the second turn among travel routes Rb41 to Rb43 along the lower side A4 when the work vehicle 10 ends the automatic traveling and the work on the travel route Rb12. As another embodiment, the display processing unit 213 may highlight the travel route Rb22 on which the work vehicle 10 is to automatically travel and work next among the travel routes Rb22 and Rb42.

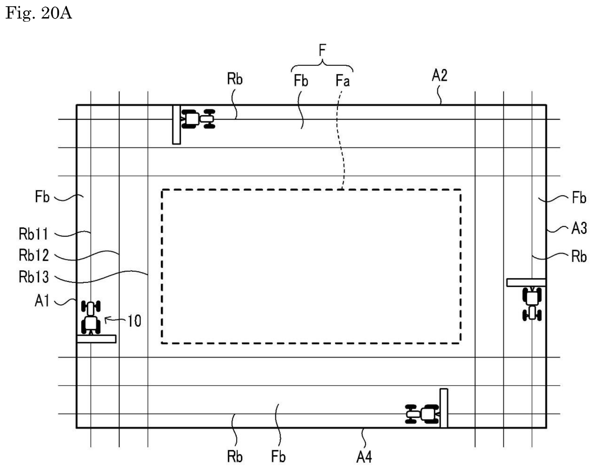

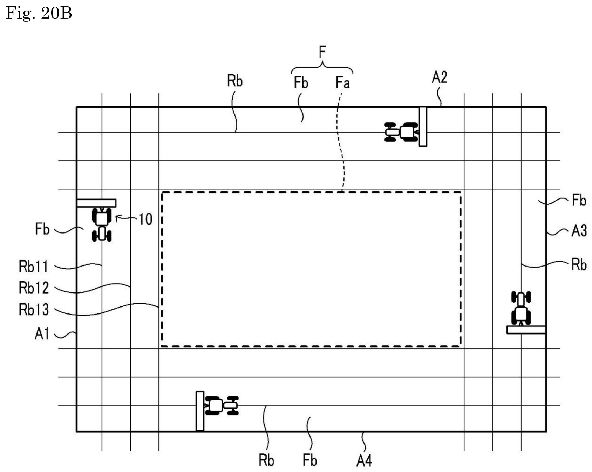

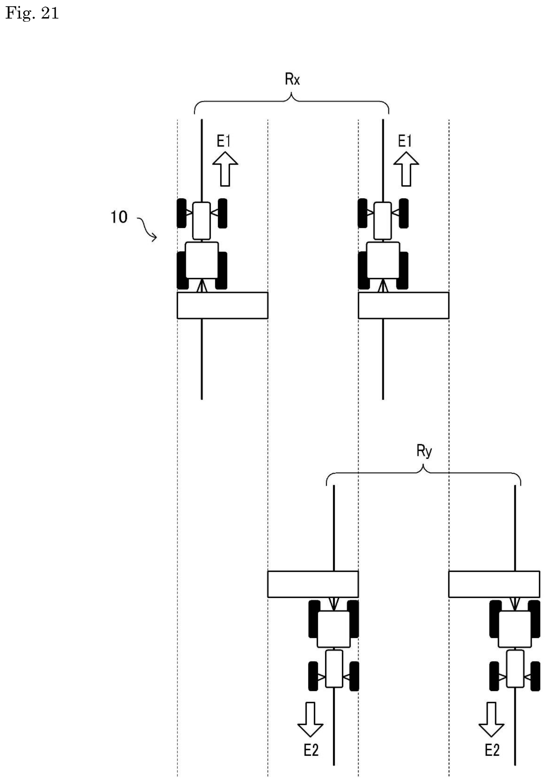

As another embodiment, when the work machine 14 is provided offset in the lateral direction with respect to the center position of the work vehicle 10 (see Fig. 2C), the display processing unit 213 may switch the travel route to be displayed according to a circling direction (clockwise, counterclockwise) of the work vehicle 10. For example, in a case where the work machine 14 is provided offset to the right side with respect to the vehicle body, the display processing unit 213 displays the travel routes Rb shown in Fig. 20A when the work vehicle 10 travels clockwise, and displays the travel routes Rb shown in Fig. 20B when the work vehicle 10 travels counterclockwise. The display processing unit 213 may specify a side closest to the current position of the work vehicle 10, estimate a circling direction (clockwise, counterclockwise) on the basis of a direction of the work vehicle 10 with respect to the side, and display the travel routes in the estimated circling direction (travel routes Rb shown in Fig. 20A or travel routes Rb shown in Fig. 20B). The above configuration is similar in the second display mode, and the display processing unit 213 may switch the travel route to be displayed between a case where the work vehicle 10 travels on an outward route and a case where the work vehicle 10 travels on a return route. For example, as shown in Fig. 21, the display processing unit 213 displays travel routes Rx when the work vehicle 10 travels in an E1 direction of the outward route, and displays travel routes Ry when the work vehicle 10 travels in an E2 direction of the return route.

### [Additional note of the invention]

Hereinafter, an outline of the invention extracted from each of the above-described embodiments will be additionally described. Note that configurations and processing functions described in the following additional notes can be selected and freely combined.

### <Additional Note 1>

A route display method for displaying, on an operation terminal, a travel route for automatically traveling a work vehicle, the route display method executed by one or a plurality of processors, including:
setting a first display mode in which all of a plurality of the travel routes generated on a basis of a plurality of sides forming an outer shape of a travel area are displayed, or a second display mode in which specific travel routes generated on a basis of a specific side among the plurality of sides are displayed; and
displaying, on the operation terminal, the travel routes on a basis of the set first display mode or the set second display mode.

### <Additional Note 2>

The route display method according to Additional Note 1, in which
the first display mode or the second display mode is set on a basis of work information related to work that the work vehicle performs while automatically traveling.

### <Additional Note 3>

The route display method according to Additional Note 1 or 2, in which
the first display mode or the second display mode is set on a basis of a selection operation of an operator.

### <Additional Note 4>

The route display method according to any one of Additional Notes 1 to 3, in which
the work vehicle includes a work machine that has a center position offset in a lateral direction with respect to a center position of the work vehicle, and
when the second display mode is set and a display switching operation by an operator is received, a display position of the travel route is translated by a distance corresponding to an offset amount and displayed.

### <Additional Note 5>

The route display method according to any one of Additional Notes 1 to 4, in which
the specific side includes a first reference side that is a side set on a basis of at least one of a current position and a current bearing of the work vehicle, among the plurality of sides.

### <Additional Note 6>

The route display method according to Additional Note 5, in which
the specific side includes the first reference side, and a second reference side that is a side set next to the first reference side.

### <Additional Note 7>

The route display method according to Additional Note 6, in which
the travel routes generated on a basis of the second reference side are displayed when the work vehicle travels on the last travel route among the travel routes generated on a basis of the first reference side.

### <Additional Note 8>

The route display method according to any one of Additional Notes 1 to 7, in which
when the first display mode is set, the travel routes generated on a basis of a first reference side that is a side set on a basis of at least one of a current position and a current bearing of the work vehicle, among the plurality of sides, and the travel route generated on a basis of other sides among the plurality of sides, are displayed in different display formats on the operation terminal.

### <Additional Note 9>

The route display method according to any one of Additional Notes 1 to 8, in which
the travel area includes an inner area, and an outer area that is an area around the inner area and an area where the work vehicle can turn and travel when traveling in the inner area,
in the first display mode, the travel routes corresponding to the plurality of sides are displayed together in the outer area, and
in the second display mode, the travel routes corresponding to the specific side are displayed, and the travel routes corresponding to other sides are not displayed, in the outer area.

### <Additional Note 10>

The route display method according to Additional Note 9, in which
when the second display mode is set, a third display mode in which the travel routes are displayed in the outer area and the travel routes are not displayed in the inner area, or a fourth display mode in which the travel routes are displayed in the outer area and the travel routes are displayed in a part of the inner area, is set.

### <Additional Note 11>

A route display program for displaying, on an operation terminal, a travel route for automatically traveling a work vehicle, the route display program causing one or a plurality of processors to execute:
setting a first display mode in which all of a plurality of the travel routes generated on a basis of a plurality of sides forming an outer shape of a travel area are displayed, or a second display mode in which specific travel routes generated on a basis of a specific side among the plurality of sides are displayed; and
displaying, on the operation terminal, the travel routes on a basis of the set first display mode or the set second display mode.

### <Additional Note 12>

A route display system for displaying, on an operation terminal, a travel route for automatically traveling a work vehicle,
a first display mode in which all of a plurality of the travel routes generated on a basis of a plurality of sides forming an outer shape of a travel area are displayed, or a second display mode in which specific travel routes generated on a basis of a specific side among the plurality of sides are displayed, being set, and
the travel routes being displayed on the operation terminal, on a basis of the set first display mode or the set second display mode.

### LIST OF REFERENCE SIGNS

- 1: Automatic traveling system
- 10: Work vehicle
- 11: Vehicle control device
- 14: Work machine
- 20: Operation terminal
- 21: Operation control unit
- 23: Operation display unit
- 211: Setting processing unit
- 212: Generation processing unit
- 213: Display processing unit
- A1: Left side
- A2: Upper side
- A3: Right side
- A4: Lower side
- C1: Center position
- C4: Center position
- D1: Menu screen
- D2: Operation screen
- D3: Setting screen
- F: Field (travel area)
- Fa: Work area (inner area)
- Fb: Headland area (outer area)
- S: Work start position
- G: Work end position
- K1: Start button
- K2: Display mode switching button
- K3: Side lock button
- K4: Route display switching button
- P1: Current position
- R: Travel route
- Ra: Travel route (of work area Fa)
- Rb: Travel route (of headland area Fb)
- W1: Work width
- W2: Work machine width
- X1: Offset amount

## Claims

1. A route display method for displaying, on an operation terminal, a travel route for automatically traveling a work vehicle, the route display method comprising:
setting a first display mode in which all of a plurality of the travel routes generated on a basis of a plurality of sides forming an outer shape of a travel area are displayed, or a second display mode in which specific travel routes generated on a basis of a specific side among the plurality of sides are displayed; and
displaying, on the operation terminal, the travel routes on a basis of the set first display mode or the set second display mode.

2. The route display method according to claim 1, wherein the first display mode or the second display mode is set on a basis of work information related to work that the work vehicle performs while automatically traveling.

3. The route display method according to claim 1, wherein the first display mode or the second display mode is set on a basis of a selection operation of an operator.

4. The route display method according to claim 1, wherein
the work vehicle includes a work machine that has a center position offset in a lateral direction with respect to a center position of the work vehicle, and
when the second display mode is set and a display switching operation by an operator is received, a display position of the travel route is translated by a distance corresponding to an offset amount and displayed.

5. The route display method according to claim 1, wherein the specific side includes a first reference side that is a side set on a basis of at least one of a current position and a current bearing of the work vehicle, among the plurality of sides.

6. The route display method according to claim 5, wherein the specific side includes the first reference side, and a second reference side that is a side set next to the first reference side.

7. The route display method according to claim 6, wherein the travel routes generated on a basis of the second reference side are displayed when the work vehicle travels on the last travel route among the travel routes generated on a basis of the first reference side.

8. The route display method according to claim 1, wherein when the first display mode is set, the travel routes generated on a basis of a first reference side that is a side set on a basis of at least one of a current position and a current bearing of the work vehicle, among the plurality of sides, and the travel route generated on a basis of other sides among the plurality of sides, are displayed in different display formats on the operation terminal.

9. The route display method according to any one of claims 1 to 8, wherein
the travel area includes an inner area, and an outer area that is an area around the inner area and an area where the work vehicle can turn and travel when traveling in the inner area,
in the first display mode, the travel routes corresponding to the plurality of sides are displayed together in the outer area, and
in the second display mode, the travel routes corresponding to the specific side are displayed, and the travel routes corresponding to other sides are not displayed, in the outer area.

10. The route display method according to claim 9, wherein when the second display mode is set, a third display mode in which the travel routes are displayed in the outer area and the travel routes are not displayed in the inner area, or a fourth display mode in which the travel routes are displayed in the outer area and the travel routes are displayed in a part of the inner area, is set.

11. A route display program for displaying, on an operation terminal, a travel route for automatically traveling a work vehicle, the route display program causing one or a plurality of processors to execute:
setting a first display mode in which all of a plurality of the travel routes generated on a basis of a plurality of sides forming an outer shape of a travel area are displayed, or a second display mode in which specific travel routes generated on a basis of a specific side among the plurality of sides are displayed; and
displaying, on the operation terminal, the travel routes on a basis of the set first display mode or the set second display mode.

12. A route display system for displaying, on an operation terminal, a travel route for automatically traveling a work vehicle,
a first display mode in which all of a plurality of the travel routes generated on a basis of a plurality of sides forming an outer shape of a travel area are displayed, or a second display mode in which specific travel routes generated on a basis of a specific side among the plurality of sides are displayed, being set, and
the travel routes being displayed on the operation terminal, on a basis of the set first display mode or the set second display mode.
